# EUROPEAN PATENT SPECIFICATION

(11) **EP 4 294 614 B1**
(45) Date of publication and mention of the grant of the patent: **16.09.2026**
(21) Application number: 22706619.8
(22) Date of filing: 18.02.2022
(51) Int. Cl.: B27G 19/02, B27G 19/04

(54) **A METHOD OF DETECTING A KICKBACK CONDITION OF A CIRCULAR SAW AND CIRCULAR SAW**
VERFAHREN ZUR ERKENNUNG EINES RÜCKSCHLAGS BEI EINER KREISSÄGE UND KREISSÄGE
PROCEDE DE DETECTION D'UNE CONDITION DE RECUL D'UNE SCIE CIRCULAIRE ET SCIE CIRCULAIRE

(30) Priority: 19.02.2021 US 202163151205 P
(43) Date of publication of application: 27.12.2023
(73) Proprietor: Festool GmbH, 73240 Wendlingen am Neckar (DE)
(72) Inventor: HILPERT, Dominik, 73079 Süßen (DE); SCHMID, Markus, 73066 Uhingen (DE); RUHLAND, Harald, 73249 Wernau (DE); STAIB, Stefan, 89428 Syrgenstein (DE); SCHOCK, Christian, 73614 Schorndorf (DE); WILDERMUTH, Markus, 73770 Denkendorf (DE); KÜBELER, Matthias, 73230 Kirchheim unter Teck (DE)
(74) Representative: Maiwald GmbH
(86) International application number: PCT/EP2022/054147
(87) International publication number: WO 2022/175488

(56) References cited:
- WO-A1-2010/067789
- WO-A1-2019/020164
- CN-A- 110 869 178
- CN-A- 111 093 921
- US-A- 4 249 117
- US-A1- 2018 304 386
- US-A1- 2019 070 746
- US-A1- 2020 114 502
- US-A1- 2020 261 992
- US-E- R E44 993

## Description

### Field of the Disclosure

The present disclosure relates to a method of detecting a kickback condition of a circular saw, according to the preamble of claim 1, and a circular saw to perform such a method. Such a circular saw is known from the document US R E44 993 E.

### Background of the Disclosure

Power tools, such as circular saws, may, under certain operational conditions, behave unpredictably, such as by rapidly accelerating in an unexpected and/or undesired manner. Such behavior may be referred to herein as a "kickback condition" of the power tool. As an example, when cutting a workpiece utilizing a circular saw, the workpiece may extend on both lateral sides of a circular saw blade of the circular saw. If the workpiece is permitted to bind with the sides of the circular saw blade and/or to pinch the sides of the circular saw blade, frictional forces between the sides of the circular saw blade and the workpiece may provide a motive force for kickback of the circular saw. As another example, if the circular saw blade unexpectedly cuts deeply into the workpiece and/or enters an uncharacteristically hard, or soft, region of the workpiece, the change in forces acting on the circular saw may manifest in a kickback condition.

Mechanisms for detecting, and responding to, kickback conditions have been developed. However, these mechanisms may be specific to a certain type, or class, of power tool. As an example, detection of a kickback condition in a stationary power tool, which generally is not moved by a user during operation thereof, may be more straightforward than detection of a corresponding kickback condition in a handheld power tool, which may experience a variety of different motions during operation thereof. Thus, there exists a need for improved handheld power tools with kickback detection and/or for methods of detecting a kickback condition of a handheld power tool.

US 2019/070746 A1 discloses a work apparatus and a method for operating the same. US R E44 993 E shows a power tool anti-kickback system with a rotational rate sensor. WO 2010/067789 A1 describes a power tool and a method for identifying a kickback event in a power tool. CN 111 093 921 A relates to an electric tool comprising a rotatable tool embodied as a saw blade or mill, provided with a sensor device for detecting a mechanical variable. CN 110 869 178 A shows a portable circular saw having a sole plate, a housing and a drive unit which is arranged at least partially in the housing and to which a tool receptacle for an interchangeable saw blade is assigned. US 2020/261992 A1 discloses a mobile machine tool having a plate-like guide element and a drive unit. US 4 249 117 A describes an anti-kickback power tool control.

### Summary of the Disclosure

Handheld circular saws with kickback detection and methods of detecting a kickback condition of a circular saw are disclosed herein. In some embodiments, the methods include moving an implement of the circular saw within an implement motion plane, detecting motion of the handheld power tool, and applying a falsification parameter. These methods also include determining that the kickback condition exists based, at least in part, on the motion of the handheld power tool as a verification parameter and the falsification parameter.

The method according to the invention includes rotating a circular saw blade of a circular saw within a blade rotation plane and detecting motion of the circular saw. The detecting motion may include detecting within an acceleration detection plane that is parallel to and/or coextensive with the blade rotation plane. The detecting motion additionally or alternatively may include detecting a direction of the acceleration of the user-actuated assembly within the acceleration detection plane. The detecting motion additionally or alternatively may include detecting an angular velocity of the user-actuated assembly about at least one rotation detection axis that extends within the acceleration detection plane. The method of the invention further includes determining that the kickback condition exists based, at least in part, on the motion of the user-actuated assembly. The determining that the kickback condition exists may include determining when the magnitude of the acceleration of the user-actuated assembly is greater than a threshold acceleration value, when the direction of the acceleration of the user-actuated assembly is within a threshold direction range, and/or when the angular velocity of the user-actuated assembly is greater than a threshold angular velocity value.

The handheld power tools include circular saws that include a user-actuated assembly. The user-actuated assembly includes a motion sensor, a controller, and a motor. The motion sensor is configured to detect motion of the user-actuated assembly and to generate a motion signal indicative of the motion of the user-actuated assembly. The controller is programmed to control the operation of the circular saw based, at least in part, on the motion signal. The motor includes a motor shaft configured to rotate about a shaft rotational axis. The circular saws also include a workpiece support configured to position the workpiece and the circular saw relative to one another when the workpiece is cut by the circular saw. The circular saws further include a pivot. The user-actuated assembly is pivotally coupled to the workpiece support via the pivot; and the user-actuated assembly and the workpiece support are configured to operatively rotate, relative to one another, about a pivot axis of the pivot. The motion sensor is configured to detect acceleration along an acceleration detection axis that extends a threshold pivot axis-acceleration axis distance of at most 4 cm from the pivot axis.

### Brief Description of the Drawings

Fig. 1 is a schematic illustration of examples of circular saws, according to the present disclosure.
Fig. 2 is another schematic illustration of examples of circular saws, according to the present disclosure.
Fig. 3 is a schematic illustration of an example of a handheld circular saw, according to the present disclosure in an unplunged orientation.
Fig. 4 is a schematic illustration of the handheld circular saw of Fig. 3 in a plunged orientation.
Fig. 5 is a plot that illustrates acceleration measured by a motion sensor that is relatively proximate a pivot of the circular saw of Figs. 3-4.
Fig. 6 is a plot that illustrates acceleration measured by a motion sensor that is relatively distal the pivot of the circular saw of Figs. 3-4.
Fig. 7 is a schematic illustration of kickback of a circular saw, according to the present disclosure.
Fig. 8 is a plot that illustrates acceleration measured during kickback by a motion sensor that is relatively proximate a trailing edge of the circular saw of Fig. 7.
Fig. 9 is a plot that illustrates acceleration measured during kickback by a motion sensor that is relatively distal a trailing edge of the circular saw of Fig. 7.
Fig. 10 is a schematic illustration of an example of a circular saw that includes a motion sensor with an acceleration detection axis that extends through a pivot axis, according to the present disclosure.
Fig. 11 is a schematic illustration of an example of a circular saw that includes a circuit board, according to the present disclosure.
Fig. 12 is a schematic illustration of an example of a circular saw, according to the present disclosure that includes a pivot proximate a leading edge of the circular saw and illustrates the circular saw in an unplunged orientation.
Fig. 13 is a schematic illustration of the circular saw of Fig. 12 in a plunged orientation.
Fig. 14 is a flowchart depicting examples of methods of detecting a kickback condition of a circular saw, according to the present disclosure.
Fig. 15 illustrates examples of a magnitude of acceleration of a circular saw that may be detected with circular saws and/or methods, according to the present disclosure.
Fig. 16 illustrates examples of a direction of acceleration of a circular saw that may be detected with circular saws and/or methods, according to the present disclosure.
Fig. 17 illustrates examples of an angular velocity of a circular saw that may be detected with circular saws and/or methods, according to the present disclosure.
Fig. 18 illustrates examples of an angular velocity of a circular saw blade that may be detected with circular saws and/or methods, according to the present disclosure.
Fig. 19 illustrates examples of a power consumption of a motor of a circular saw that may be detected with circular saws and/or methods, according to the present disclosure.
Fig. 20 illustrates examples of linear acceleration components that may be detected and/or utilized with circular saws and/or methods as a falsification, according to the present disclosure.
Fig. 21 illustrates examples of angular velocity components that may be detected and/or utilized with circular saws and/or methods as a falsification, according to the present disclosure.

### Detailed Description and Best Mode of the Disclosure

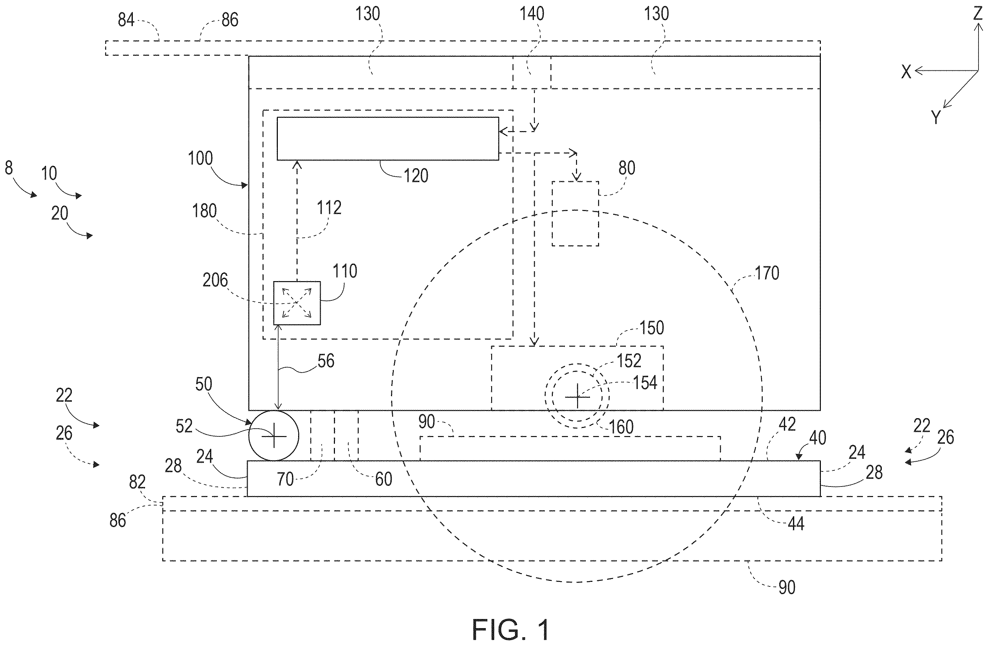

Figs. 1-21 provide examples of handheld circular saws 10, of components and/or features of circular saws 10, of parameters measured during operation of circular saws 10, and/or of methods 300, according to the present disclosure. Elements that serve a similar, or at least substantially similar, purpose are labeled with like numbers in each of Figs. 1-21, and these elements may not be discussed in detail herein with reference to each of Figs. 1-21. Similarly, all elements may not be labeled in each of Figs. 1-21, but reference numerals associated therewith may be utilized herein for consistency. Elements, components, and/or features that are discussed herein with reference to one or more of Figs. 1-21 may be included in and/or utilized with any of Figs. 1-21 without departing from the scope of the present disclosure. In general, elements that are likely to be included in a particular embodiment are illustrated in solid lines, while elements that are optional are illustrated in dashed lines. However, elements that are shown in solid lines may not be essential to all embodiments and, in some embodiments, may be omitted without departing from the scope of the present disclosure.

Figs. 1-4, 7, and 10-13 are schematic illustrations of examples of handheld power tools 8, according to the present disclosure.

As collectively illustrated in Figs. 1-4, 7, and 10-13, and with specific reference to Figs. 1-2, circular saws 10 include a workpiece support 40 and a pivot 50. Circular saw 10 includes according to the invention a user-actuated assembly 100, which is configured to rotate relative to workpiece support 40 about pivot 50 and/or to cut the workpiece during operative use of the circular saw. Workpiece support 40 is configured to position a workpiece 90 and the circular saw relative to one another when the workpiece is cut by the circular saw, to support a remainder of the circular saw relative to the workpiece, to support the workpiece relative to the circular saw, and/or to position the workpiece relative to user-actuated assembly 100. Workpiece support 40 may include and/or may define an assembly-facing side 42, which faces toward user-actuated assembly 100, and/or an assembly-opposed side 44, which faces away from the user-actuated assembly. Assembly-facing side 42 also may be referred to herein as a user-actuated assembly-facing side 42.

In some examples of circular saws 10, such as when circular saws 10 include miter saws, radial arm saws, chop saws, and/or bevel saws, workpiece 90 may be positioned on and/or may be supported by assembly-facing side 42 when the circular saw is utilized to cut the workpiece. In some examples of circular saws 10, such as when circular saws 10 include plunge saws and/or track saws, workpiece 90 may be positioned on assembly-opposed side 44 and/or the circular saw may be supported by the workpiece via the workpiece support when the circular saw is utilized to cut the workpiece.

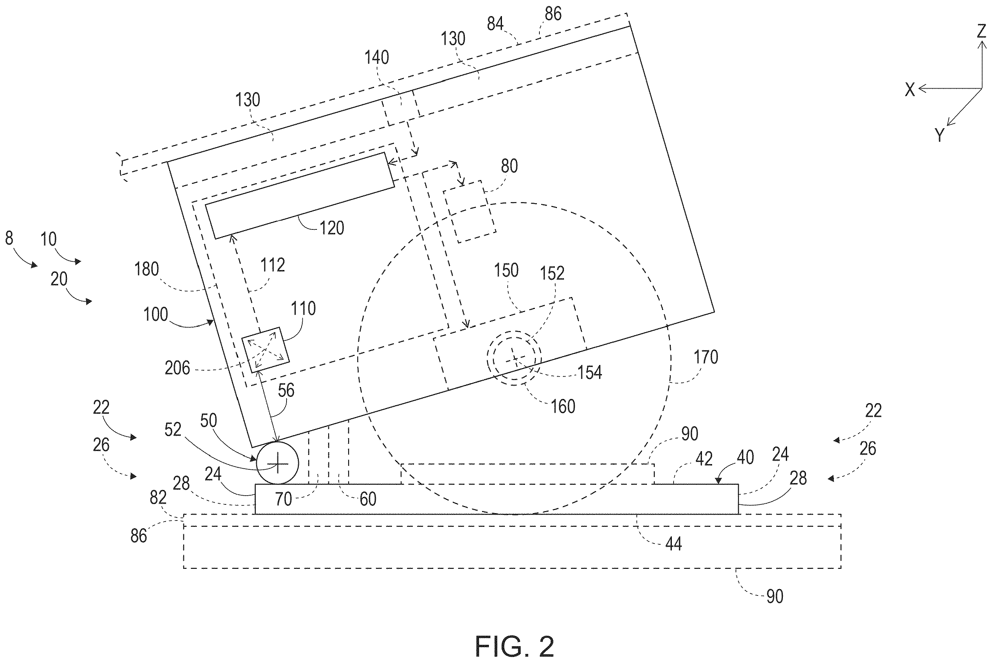

User-actuated assembly 100 is pivotally coupled to workpiece support 40 via pivot 50. In addition, user-actuated assembly 100 and workpiece support 40 is configured to operatively rotate, turn, and/or pivot, relative to one another, about a pivot axis 52 of pivot 50. This rotation is illustrated by the transition between Figs. 1 and 2.

This rotation is utilized to selectively engage a circular saw blade 170 of user-actuated assembly 100 with workpiece 90, such as to cut the workpiece with the spinning circular saw blade. As an example, and as illustrated by the transition between Figs. 1 and 2, this rotation may be utilized to selectively vary a region of the circular saw blade that extends on assembly-opposed side 44 of workpiece support 40, an extent to which the circular saw blade extends on the assembly-opposed side of the workpiece, and/or a depth-of-cut of the circular saw blade.

In some examples, such as when circular saws 10 include handheld circular saws that are configured to be held by a user when utilized to cut the workpiece, the circular saws may have and/or define a leading region 22 and a trailing region 26. Leading region 22 may be configured to lead, to be in front, and/or to initiate contact with the workpiece when the circular saw is utilized to cut the workpiece, such as when the circular saw is urged through the workpiece by the user. Trailing region 26 may be configured to trail the leading region and/or to be in back when the circular saw is utilized to cut the workpiece.

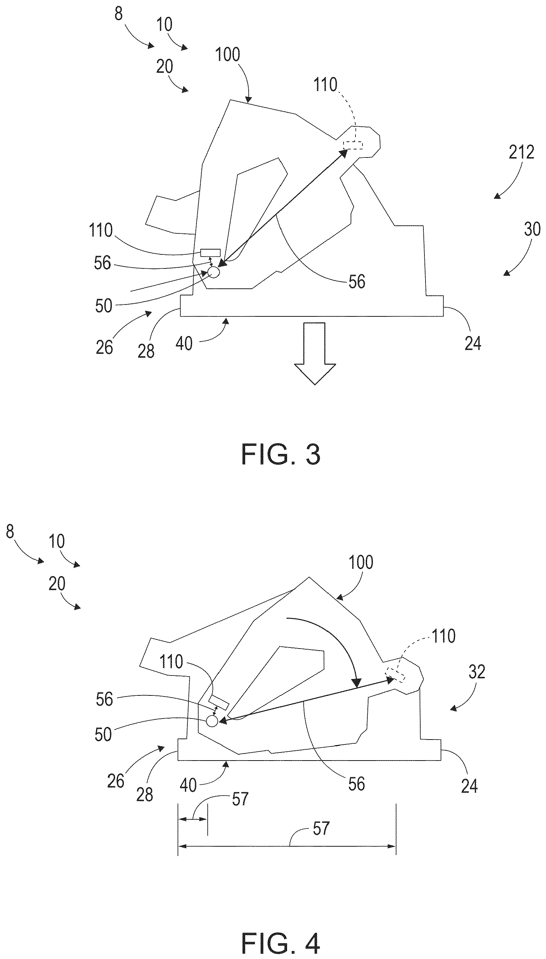

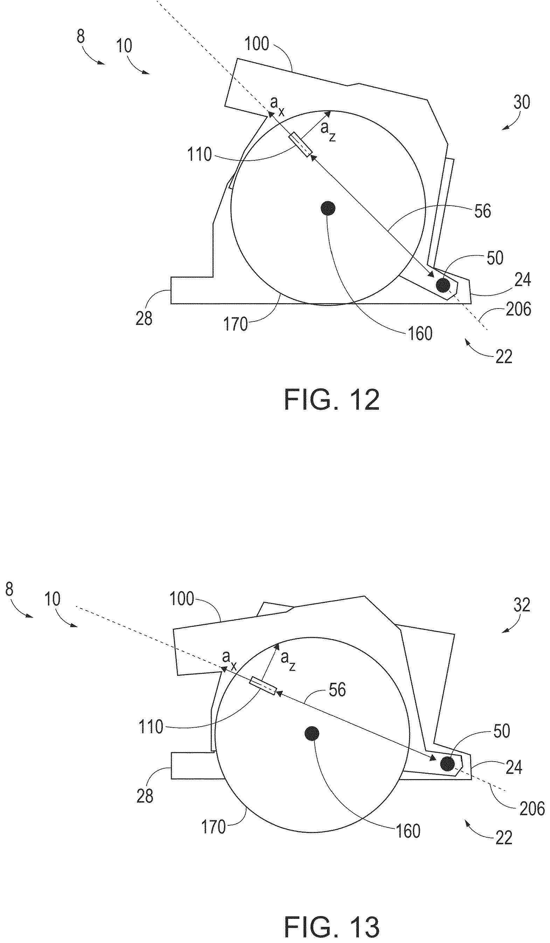

As indicated in solid lines in Figs. 1-2 and also in Figs. 12-13, pivot 50 may be positioned within and/or proximate leading region 22. Alternatively, and as indicated in dashed lines in Figs. 1-2 and also in Figs. 3-4, 7, and 10-11, pivot 50 may be positioned within and/or proximate trailing region 26. Stated another way, pivot 50 may be within an extremity of circular saw 10, such as leading region 22 or trailing region 26. Stated yet another way, leading region 22 may define a leading edge 24, trailing region 26 may define a trailing edge 28, and pivot axis 52 may be within a threshold edge distance of the leading edge or the trailing edge. Examples of the threshold edge distance include distances of at least 1 millimeter (mm), at least 5 mm, at least 1 centimeter (cm), at least 2 cm, at least 4 cm, at most 10 cm, at most 8 cm, at most 6 cm, and/or at most 4 cm.

User-actuated assembly 100 includes a motion sensor 110 and may include a controller 120. Motion sensor 110 may be configured to detect motion of the user-actuated assembly and/or to generate a motion signal 112, which may be indicative of the motion of the user-actuated assembly. Stated another way, and as discussed in more detail herein, motion sensor 110 may be configured to detect motion of user-actuated assembly 100 that may be indicative of a kickback condition of the circular saw and/or of initiation of the kickback condition. Similar to pivot 50, motion sensor 110 may be positioned within leading region 22 and/or within trailing region 26 of the circular saw.

As used herein, the phrase "kickback condition" refers to a condition in which the circular saw, or at least a region or user-actuated assembly of the circular saw, moves or is urged to move in an unexpected and/or unpredicted manner during operative use of the circular saw to cut the workpiece. Such motion may include unexpected linear and/or rotational motion and/or acceleration of the circular saw and has a potential to startle the user of the circular saw and/or to damage the workpiece. The circular saws and methods disclosed herein may be configured to detect one or more parameters that may be indicative of initiation of the kickback condition, or of an initial stage of the kickback condition, and to respond to this detection in a manner that mitigates, or decreases, a magnitude of the motion of the circular saw. As such, the circular saws and methods disclosed herein may decrease the potential to startle the user of the circular saw and/or to damage the workpiece as a result of the kickback condition.

Controller 120 may be adapted, configured, and/or programmed to control the operation of circular saw 10 based, at least in part, on motion signal 112. As an example, and as also discussed in more detail herein, controller 120 may be programmed to determine when the kickback condition exists, or has initiated, and to respond to the kickback condition, such as to mitigate an impact of the kickback condition, to decrease a potential for damage to the workpiece as a result of the kickback condition, and/or to decrease a potential for injury to the user as a result of the kickback condition.

As illustrated in dashed lines in Figs. 1-2, user-actuated assemblies 100 of circular saws 10 may include a gripping region 130. Gripping region 130, when present, may be configured to be gripped and/or held by the user of the circular saw during operation of the circular saw to cut the workpiece. In some examples, gripping region 130 may be within and/or proximate leading region 22 of circular saw 10. In some examples, gripping region 130 may be within and/or proximate trailing region 26 of circular saw 10.

As also illustrated in dashed lines in Figs. 1-2, user-actuated assemblies 100 of circular saws 10 may include at least one switch 140. Switch 140, when present, may be configured to be selectively actuated by the user, such as to selectively initiate operation of the circular saw, to selectively enable the circular saw to operate, and/or to selectively apply an electric current to at least one other component of the circular saw, such as controller 120. As illustrated, switch 140 may be proximate gripping region 130, such as to permit and/or facilitate selective actuation of the switch by the user of the circular saw while the user grips the gripping region. Examples of switch 140 include a trigger switch, a normally open switch, and/or a single throw switch.

As illustrated in dashed lines in Figs. 1-2, user-actuated assemblies 100 of circular saws 10 may include a motor 150. Motor 150, when present, may include a motor shaft 152 and/or may be configured to rotate the motor shaft about a shaft rotational axis 154. Examples of motor 150 include an electric motor, an AC electric motor, a DC electric motor, a brushless DC electric motor, a variable-speed motor, and/or a single-speed motor.

As also illustrated in dashed lines in Figs. 1-2, user-actuated assemblies 100 of circular saws 10 may include an arbor 160. Arbor 160, when present, may be operatively attached to motor shaft 152 and/or may be configured to receive the circular saw blade and/or to operatively attach the circular saw blade to the motor shaft and/or to the user-actuated assembly. Additionally or alternatively, arbor 160 may be configured to drive, or to rotate, circular saw blade 170 within a blade rotation plane of the circular saw blade. The blade rotation plane may be parallel, or at least substantially parallel, to the X-Z plane of Figs. 1-2. Examples of arbor 160 include any suitable clamp, compression mechanism, washer, bushing, spacer, and/or threaded hole that may be operatively attached to, defined by, and/or in mechanical communication with motor shaft 152.

As illustrated in dashed lines in Figs. 1-2, user-actuated assemblies 100 of circular saws 10 may include and/or be configured to operatively receive circular saw blade 170. Circular saw blade 170, when present, may be operatively attached to the circular saw via arbor 160 and/or may be configured to selectively rotate within the blade rotation plane to cut the workpiece. Circular saw blades 170 generally include a disc, which may be a metallic disc, that defines a central opening, which is sized to receive arbor 160, and a cutting edge, which is defined on an outer circumference of the disc. The cutting edge may, as examples, include a plurality of cutting teeth and/or an abrasive material. Examples of circular saw blade 170 include metallic circular saw blades, abrasive circular saw blades, carbide-toothed circular saw blades, diamond circular saw blades, rip cut circular saw blades, crosscut circular saw blades, combination circular saw blades, specialty circular saw blades, metal cutting circular saw blades, tile cutting circular saw blades, and/or composite cutting circular saw blades.

Figs. 1-2 illustrate user-actuated assemblies 100 as including motion sensor 110 and controller 120. Figs. 1-2 further illustrate user-actuated assemblies 100 as optionally including several additional components, such as gripping region 130, switch 140, motor 150, arbor 160, and/or circular saw blade 170. In order to detect motion of the user-actuated assembly, motion sensor 110 generally will be associated with and/or at least indirectly attached to the user-actuated assembly.

However, it is within the scope of the present disclosure that any suitable component and/or components of circular saws 10, such as those disclosed herein, may be incorporated into the circular saws in any suitable manner. As an example, one or more components of circular saws 10, such as controller 120, gripping region 130, switch 140, motor 150, arbor 160, and/or circular saw blade 170, may be associated with and/or attached to workpiece support 40 and/or pivot 50. Additionally or alternatively, one or more components of circular saws 10 may be indirectly attached to user-actuated assembly 100, such as via workpiece support 40 and/or pivot 50.

Motion sensor 110 may include any suitable structure that may be adapted, configured, designed, and/or constructed to detect motion of the user-actuated assembly and/or to generate the motion signal. As an example, the motion sensor may include and/or be a micro-electrical-mechanical system (MEMS) motion sensor.

As discussed, motion sensor 110 may form a portion of user-actuated assembly 100. Stated another way, motion sensor 110 may be configured to rotate, with user-actuated assembly 100, about pivot axis 52, and/or relative to workpiece support 40. Such a configuration may permit and/or facilitate measurement, or direct measurement, of motions of circular saw 10 that may act upon, may be experienced by, and/or may contact the user of the circular saw. Additionally or alternatively, such a configuration also may permit and/or facilitate measurement, or direct measurement, of motion, or translational motion, of circular saw blade 170.

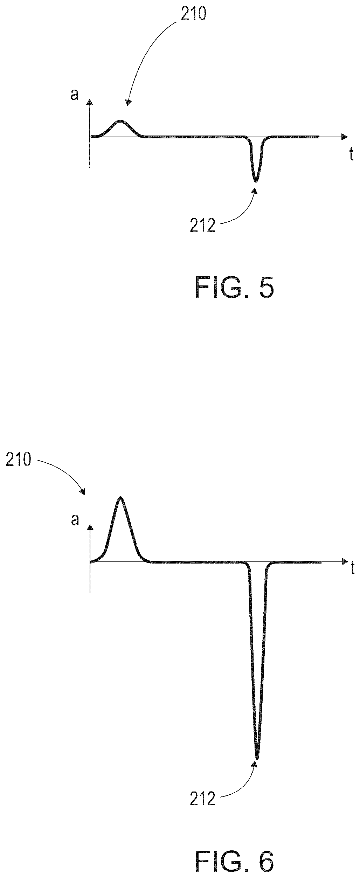

However, such a configuration also may provide additional challenges and/or may make it more difficult to detect the kickback condition and/or to distinguish the kickback condition from other conditions that may occur during normal, or non-kickback, operation of the circular saw. As an example, a plunging action of a circular saw 10 in the form of a plunge saw 20, according to the present disclosure, is illustrated by the transition from the configuration that is illustrated in Fig. 3 to the configuration that is illustrated in Fig. 4. During such plunging action, or motion, user-actuated assembly 100 is rotated relative to workpiece support 40, via pivot 50, as the plunge saw transitions from an unplunged orientation 30, as illustrated in Fig. 3, to a plunged orientation 32, as illustrated in Fig. 4. As illustrated by the plots of Figs. 5-6, motion sensor 110 of user-actuated assembly 100 may experience acceleration during initiation of this plunging action, as indicated at 210, and also during termination of the plunging action, as indicated at 212. It may not be desirable for controller 120 to characterize such expected acceleration as a kickback condition. As such, and as discussed in more detail herein, controller 120 may require that the detected acceleration have a specific magnitude, may require that the detected acceleration have a specific orientation, and/or may utilize one or more additional parameters to determine and/or to establish that detected acceleration of user-actuated assembly 100 is a result of, or corresponds to, a kickback condition of the circular saw.

Returning to Figs. 1-2, motion sensor 110 may be configured to detect any suitable motion of user-actuated assembly 100. As examples, the motion sensor may be configured to detect acceleration of the user-actuated assembly along a single detection axis 206, which also may be referred to herein as an acceleration detection axis 206, and/or along a plurality of detection axes 206, such as two perpendicular detection axes 206 and/or three orthogonal detection axes 206. As another example, the motion sensor may be configured to detect rotation of the user-actuated assembly about single detection axis 206, which also may be referred to herein as a rotation detection axis 206, and/or about a plurality of detection axes 206, such as the two perpendicular detection axes 206 and/or the three orthogonal detection axes 206.

In some examples, motion sensor 110 may be configured to detect acceleration of user-actuated assembly 100 within, or only within, an acceleration detection plane. The acceleration detection plane may be perpendicular, or at least substantially perpendicular, to shaft rotational axis 154, perpendicular, or at least substantially perpendicular, to pivot axis 52, and/or parallel, or at least substantially parallel, to the blade rotation plane within which the circular saw blade rotates during operation of the circular saw. As a specific example, the acceleration detection plane may be parallel, or at least substantially parallel, to the X-Z plane of Figs. 1-2.

In some examples, motion sensor 110 may be configured to detect rotation of user-actuated assembly 100 about, or only about, detection axes 206 that extend within the acceleration detection plane. Stated another way, motion sensor 110 may be configured to detect rotation of user-actuated assembly 100 about the same detection axes 206 of motion sensor 110 that are utilized to detect acceleration of user-actuated assembly 100 within the acceleration detection plane.

A location of motion sensor 110 on user-actuated assembly 100 may impact a sensitivity of the motion sensor to various motions of the user-actuated assembly. As an example, and as illustrated by Figs. 3-4, when motion sensor 110 is positioned relatively closer to pivot 50 (as illustrated in solid lines), a sensitivity of the motion sensor to the plunging motion of plunge saw 20 may be relatively smaller when compared to when the motion sensor is positioned relatively farther from pivot 50 (as illustrated in dashed lines). This is illustrated by the increase of magnitude of acceleration at 210 and 212 in the plot of Fig. 6, as compared to the plot of Fig. 5. Fig. 6 illustrates acceleration measured by motion sensor 110 that is illustrated in dashed lines in Figs. 3-4 and that defines a relatively larger threshold pivot axis-sensor distance 56. In contrast, Fig. 5 illustrates acceleration measured by motion sensor 110 that is illustrated in solid lines and that defines a relatively smaller threshold pivot axis-sensor distance 56.

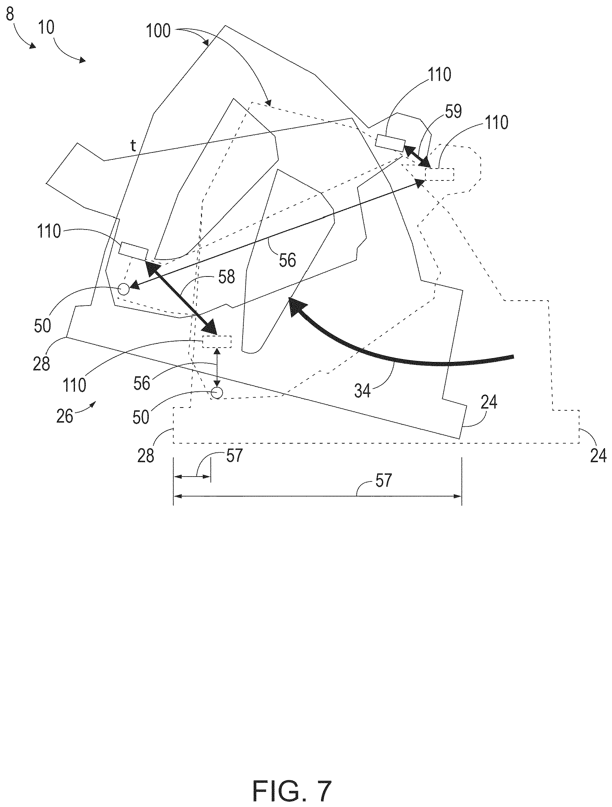

As another example, and as illustrated in Fig. 7, when motion sensor 110 is positioned relatively closer to trailing edge 28 (i.e., a threshold trailing edge-sensor distance 57 is relatively smaller), a sensitivity of the motion sensor to a kickback motion of the circular saw may be relatively greater when compared to when the motion sensor is positioned relatively farther from trailing edge 28 (i.e., distance 57 is relatively greater). In Fig. 7, this kickback motion, which is indicated at 34, results in the circular saw moving from the orientation that is illustrated in dashed lines to the orientation that is illustrated in solid lines. As illustrated, motion sensor 110 that is relatively closer to trailing edge 28 moves a larger distance 58, as compared to a distance 59 moved by motion sensor 110 that is relatively farther from the trailing edge.

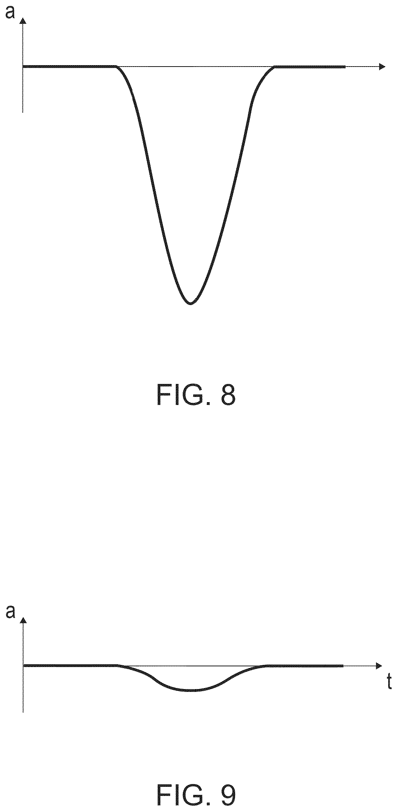

Fig. 8 illustrates acceleration measured by motion sensor 110 that is relatively closer to trailing edge 28 (i.e., defines the relatively smaller threshold trailing edge-sensor distance 57) during the kickback motion that is indicated at 34, while Fig. 9 illustrates acceleration measured by motion sensor 110 that is relatively farther from trailing edge 28 (i.e., defines the relatively larger threshold trailing edge-sensor distance 57) during the kickback motion that is indicated at 34. As illustrated, the magnitude of the acceleration signal is significantly larger in Fig. 8 when compared to Fig. 9.

With this in mind, it may be desirable to position motion sensor 110 proximate pivot 50 and/or proximate trailing edge 28. Such a configuration may both decrease sensitivity of the motion sensor to normal motions of the circular saw and increase sensitivity of the motion sensor to a kickback condition. Thus, and in some examples, motion sensor 110 may be positioned distance 56 from pivot axis 52, as illustrated in Figs. 1-4. Examples of distance 56 include distances of at least 1 cm, at least 2 cm, at least 3 cm, at least 4 cm, at least 5 cm, at least 6 cm, at least 7 cm, at least 8 cm, at most 20 cm, at most 18 cm, at most 16 cm, at most 14 cm, at most 12 cm, at most 10 cm, at most 9 cm, at most 8 cm, at most 7 cm, at most 6 cm, at most 5 cm, at most 4 cm, at most 3 cm, at most 2 cm, and/or at most 1 cm.

In some examples, motion sensor 110 may be configured to detect acceleration along acceleration detection axis 206, along a single acceleration detection axis 206, and/or only along the single acceleration detection axis 206. Relatively shorter distances between acceleration detection axis 206 and pivot axis 52 may decrease a sensitivity of motion sensor 110 to rotation about the pivot axis while still permitting the motion sensor to detect kickback motion of the circular saw. With this in mind, and in some examples, a distance, or a shortest distance, between acceleration detection axis 206 and pivot axis 52 may be a threshold pivot axis-acceleration axis separation distance. Examples of the threshold pivot axis-acceleration axis separation distance include distances of at least 1 mm, at least 2 mm, at least 3 mm, at least 4 mm, at least 5 mm, at least 6 mm, at least 7 mm, at least 8 mm, at least 9 mm, at least 1 cm, at most 4 cm, at most 3 cm, at most 2 cm, at most 1 cm, at most 8 mm, at most 6 mm, at most 4 mm, at most 2 mm, and/or at most 1 mm.

When pivot 50 is located relatively closer to the leading edge 24, and as illustrated in Figs. 12-13, it may be desirable to position motion sensor 110 relatively further from pivot 50 and/or relatively closer to trailing edge 28. Such a configuration may both decrease sensitivity of the motion sensor to normal motions of the circular saw and increase sensitivity of the motion sensor to a kickback condition. Thus, and in some examples, motion sensor 110 may be positioned distance 56 from pivot axis 52, as illustrated in Figs. 1-2. In such examples, distance 56 includes distances of at least 5 cm, at least 6 cm, at least 7 cm, at least 8 cm, at most 20 cm, at most 18 cm, at most 16 cm, at most 14 cm, at most 12 cm, at most 10 cm, at most 9 cm, at most 8 cm, at most 7 cm, and/or at most 6 cm.

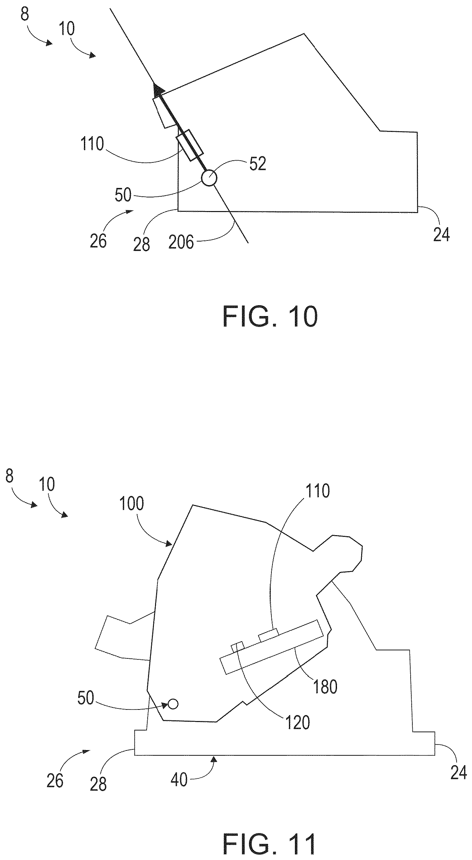

In a specific example, and although not required to all circular saws 10, motion sensor 110 may be positioned and/or oriented such that acceleration detection axis 206 may intersect pivot axis 52, may intersect pivot 50, may extend through the pivot axis, and/or may extend perpendicular, or at least substantially perpendicular, to the pivot axis, as illustrated in Figs. 10 and 12-13. In such a configuration, motion sensor 110 may not detect, or may only minimally detect, rotation about pivot axis 52, further decreasing sensitivity to the plunging motion or cutting depth setting of the circular saw while still permitting detection of kickback motion of the circular saw.

In some examples, acceleration detection axis 206 may extend radially relative to shaft rotational axis 154 of motor 150. Such a configuration may increase a sensitivity of motion sensor 110 to acceleration, or translational acceleration, of motor shaft 152 and/or of circular saw blade 170.

In some examples, and as illustrated in Figs. 1-2 and 11, user-actuated assembly 100 may include a circuit board 180 that may include both controller 120 and motion sensor 110. Such a configuration may decrease costs associated with construction of circular saw 10, thereby permitting the circular saw to be produced more economically. When both controller 120 and motion sensor 110 are on the same circuit board 180, spatial constraints may dictate that the motion sensor is positioned a finite distance from pivot axis 52 and/or that detection axis 206 may not intersect pivot axis 52.

Controller 120 may include any suitable structure that may be adapted, configured, designed, constructed, and/or programmed to control the operation of the circular saw based, at least in part, on motion signal 112. In some examples, and as discussed, controller 120 may be programmed to determine that motion signal 112 is indicative of the kickback condition of the circular saw. In some examples, controller 120 may be programmed to determine that motion signal 112 is indicative of the kickback condition when an acceleration axis of acceleration, which is detected by motion sensor 110, extends through pivot axis 52. In some examples, controller 120 may be programmed to perform any suitable step and/or steps of methods 300, which are disclosed herein.

In some examples, controller 120 further may be programmed to cease rotation of the circular saw blade responsive to the determination that the kickback condition exists. As an example, and as illustrated in Figs. 1-2, circular saw 10 may include a brake assembly 80, which may be configured to be selectively actuated to cease rotation of the circular saw blade. In some such examples, controller 120 may be programmed to actuate brake assembly 80 responsive to the kickback condition and/or responsive to the determination that the kickback condition exists. As another example, controller 120 additionally or alternatively may be programmed to cease supply of electric current to motor 150 or short circuit / short to ground stator coils of motor 150 responsive to the kickback condition and/or responsive to the determination that the kickback condition exists.

Controller 120 may include and/or be any suitable structure, device, and/or devices that may be adapted, configured, designed, constructed, and/or programmed to perform the functions discussed herein. As examples, controller 120 may include one or more of an electronic controller, a dedicated controller, a special-purpose controller, a display device, a logic device, a memory device, and/or a memory device having computer-readable storage media.

The computer-readable storage media, when present, also may be referred to herein as non-transitory computer readable storage media. This non-transitory computer readable storage media may include, define, house, and/or store computer-executable instructions, programs, and/or code; and these computer-executable instructions may instruct circular saw 10 and/or controller 120 thereof to perform any suitable portion, or subset, of methods 300. Examples of such non-transitory computer-readable storage media include CD-ROMs, disks, hard drives, flash memory, etc. As used herein, storage, or memory, devices and/or media having computer-executable instructions, as well as computer-implemented methods and other methods according to the present disclosure, are considered to be within the scope of subject matter deemed patentable in accordance with Section 101 of Title 35 of the United States Code.

As illustrated in dashed lines in Figs. 1-2, circular saws 10 may include a biasing mechanism 60. Biasing mechanism 60, when present, may be adapted, configured, designed, and/or constructed to bias user-actuated assembly 100 away from workpiece support 40 and/or to bias the user-actuated assembly to rotate away from the workpiece support about pivot axis 52. Examples of biasing mechanism 60 include a resilient member, a spring, a coil spring, and/or a torsion spring.

As also illustrated in dashed lines in Figs. 1-2, circular saws 10 may include a plunge lock 70. Plunge lock 70, when present, may be configured to be selectively deactivated by the user of the circular saw to selectively permit user-actuated assembly 100 to pivot about pivot axis 52 and/or toward workpiece support 40. Examples of plunge lock 70 include any suitable catch and/or latch.

Circular saws 10 may include and/or be any suitable circular saw. As an example, circular saws 10 may include and/or be handheld circular saws 10, such as may be configured to be lifted and/or held by the user while the circular saw is utilized to cut the workpiece. Handheld circular saw 10 additionally or alternatively may be referred to as a portable circular saw 10 and/or a non-stationary circular saw 10. As another example, circular saws 10 may include and/or be semi-stationary circular saws 10. As used herein, the phrase "semi-stationary circular saws" refers to circular saws that include a large, a heavy, and/or a stationary workpiece support 40 that is configured to remain stationary on a support surface while the circular saw is utilized to cut the workpiece. However, because user-actuated assembly 100 is pivotally coupled to workpiece support 40 via pivot 50, the user-actuated assembly still may experience a kickback condition, which may cause unexpected and/or undesired rotation of the user-actuated assembly.

As more specific examples, circular saw 10 may include a plunge saw, a miter saw, a track saw, a radial arm saw, a chop saw, a sliding miter saw, a bevel saw, and/or a panel saw. When circular saw 10 includes the track saw, the track saw further may include a track 82, which may be configured to guide the track saw relative to workpiece 90. When circular saw 10 includes the radial arm saw, the radial arm saw further may include a support arm 84, which may be configured to guide the radial arm saw relative to the workpiece. When circular saw 10 includes the panel saw, the panel saw further may include a frame 86, which may be configured to guide and/or orient the panel saw relative to the workpiece. Some circular saws may include combinations of these elements. As an example, a sliding miter saw may include both pivot 50 and frame 86, with user-actuated assembly 100 being configured to both rotate relative to workpiece support 40 about pivot axis 52 of pivot 50 and translate relative to workpiece support 40 along frame 86.

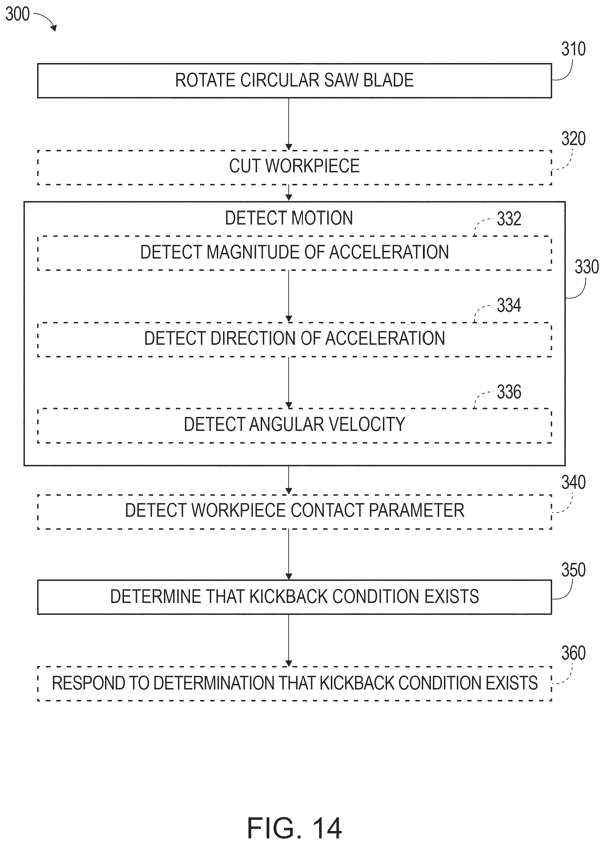

Fig. 14 is a flowchart depicting examples of methods 300 of detecting a kickback condition of a handheld power tool, such as a circular saw, according to the present disclosure. Examples of the handheld power tools and/or of the circular saw are disclosed herein with reference to handheld power tools 8 and/or circular saws 10 of Figs. 1-4, 7, and 10-13.

Methods 300 include rotating a circular saw blade at 310 and may include cutting a workpiece at 320. Methods 300 also include detecting motion of the circular saw at 330 and may include detecting a workpiece contact parameter at 340. Methods 300 further include determining that a kickback condition exists at 350 and may include responding to the determination that the kickback condition exists at 360. Methods 300 may include determining that a kickback condition exists at 350 based, at least in part, on the verification parameter that includes the motion of the handheld power tool and optionally further includes the workpiece contact parameter.

Rotating the circular saw blade at 310 may include rotating the circular saw blade within a blade rotation plane. An example of the blade rotation plane is disclosed herein. This may include rotating the circular saw blade to permit and/or to facilitate the cutting at 320. The rotating at 310 may be accomplished in any suitable manner. As an example, and as discussed, the circular saw may include a motor that includes a motor shaft configured to rotate about a shaft rotational axis. As also discussed, the circular saw also may include an arbor that attaches the circular saw blade to the motor shaft. In some such examples, the rotating at 310 may include applying, or supplying, an electric current to the motor to provide a motive force for rotation of the motor shaft about the shaft rotational axis, thereby rotating the circular saw blade via the arbor. Examples of the motor, motor shaft, and shaft rotational axis are disclosed herein with reference to motor 150, motor shaft 152, and shaft rotational axis 154, respectively. Examples of the arbor are disclosed herein with reference to arbor 160. Examples of the circular saw blade are disclosed herein with reference to circular saw blade 170.

The rotating at 310 may be performed with any suitable timing and/or sequence during methods 300. As examples, the rotating at 310 may be performed prior to, during, and/or concurrently with the cutting at 320, the detecting at 330, the detecting at 340, the determining at 350, and/or the responding at 360.

Cutting the workpiece at 320 may include cutting the workpiece with the circular saw blade. The cutting at 320 may be accomplished in any suitable manner. As an example, the cutting at 320 may include operatively engaging the circular saw blade, or a plurality of teeth of the circular saw blade, with the workpiece to form and/or define a cut, a slit, and/or a kerf within the workpiece. The cutting at 320 additionally or alternatively may include translating and/or rotating the circular saw relative to the workpiece to extend the cut, slit, and/or kerf.

In some examples, the cutting at 320 additionally may include establishing the kickback condition. Stated another way, and during the cutting at 320, the kickback condition may occur. As an example, the circular saw blade may bind with the workpiece and/or may be pinched by the workpiece, thereby resulting in kickback motion of the circular saw during the kickback condition. As another example, the circular saw blade may cut into an uncharacteristically hard, or soft, region of the workpiece and/or may catch on a region of the workpiece, thereby resulting in kickback motion of the circular saw during the kickback condition.

The cutting at 320 may be performed with any suitable timing and/or sequence during methods 300. As an example, the cutting at 320 may be performed subsequent to initiating the rotating at 310 and/or concurrently with the rotating at 310. As additional examples, the cutting at 320 may be performed prior to, during, and/or concurrently with the detecting at 330 the detecting at 340, the determining at 350, and/or the responding at 360.

Detecting motion of the circular saw at 330 may include detecting any suitable motion of the circular saw that may be indicative of and/or may be utilized to predict the kickback condition. The detecting at 330 may be performed with any suitable timing and/or sequence during methods 300. As examples, the detecting at 330 may be performed subsequent to, subsequent to initiation of, during, and/or concurrently with the rotating at 310 and/or the cutting at 320. As another example, the detecting at 330 may be performed concurrently with the detecting at 340. As further examples, the detecting at 330 may be performed prior to the determining at 350 and/or prior to the responding at 360. Additionally or alternatively, the determining at 350 and/or the responding at 360 may be based upon and/or may be at least partially responsive to the detecting at 330.

In some examples, the detecting at 330 may include detecting a magnitude of acceleration, as indicated at 332. The detecting at 332 may include detecting the magnitude of acceleration of the circular saw and/or of at least one component of the circular saw, such as of user-actuated assembly 100, which is discussed in more detail herein. In some examples, the detecting at 332 may include detecting within an acceleration detection plane. The acceleration detection plane may be parallel, or at least substantially parallel, to the blade rotation plane and/or may be coextensive with the blade rotation plane. Examples of the acceleration detection plane are disclosed herein.

The detecting at 332 may include detecting the magnitude of the acceleration in any suitable manner. As an example, and as discussed, the circular saw may include a motion sensor, such as motion sensor 110 that is disclosed herein. In such a configuration, the detecting at 332 may include detecting with, via, and/or utilizing the motion sensor.

In some examples, the detecting at 332 may include detecting a first acceleration component in a first direction that is within the acceleration detection plane and detecting a second acceleration component in a second direction that is also within the acceleration detection plane and may be oriented differently from, or even perpendicular to, the first direction. In some such examples, the magnitude of acceleration is a magnitude of a vector sum of the first acceleration component and the second acceleration component.

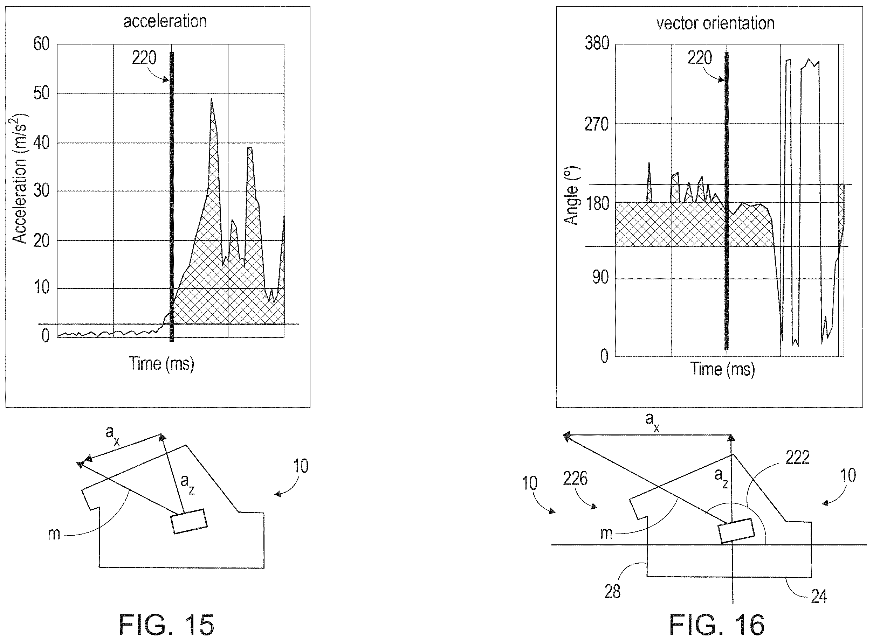

An example of the magnitude of acceleration of the circular saw is illustrated in Fig. 15, both as a time plot and in schematic form. As illustrated in the time plot of Fig. 15, the magnitude of acceleration of the circular saw may increase substantially as a result of and/or during a kickback condition, which is indicated at 220. As such, the magnitude of acceleration of the circular saw may be indicative of the kickback condition and/or may be utilized to at least partially establish that the kickback condition exists.

As illustrated in the schematic circular saw 10 of Fig. 15, the detecting at 332 may include detecting the first acceleration component, such as acceleration component aₓ, and detecting the second acceleration component, such as acceleration component a_{z}. In such a configuration, the magnitude of the acceleration, m, may be determined via a vector sum of the first acceleration component and the second acceleration component.

In some examples, the detecting at 330 may include detecting a direction of the acceleration, as indicated at 334. The detecting at 334 may include detecting the direction of acceleration of the circular saw 10 and/or of user-actuated assembly 100. In some examples, the detecting at 334 may include detecting within the acceleration detection plane.

The detecting at 334 may include detecting the direction of the acceleration in any suitable manner. As an example, and as discussed, the circular saw may include the motion sensor, such as motion sensor 110 that is disclosed herein. In such a configuration, the detecting at 334 may include detecting with, via, and/or utilizing the motion sensor.

In some examples, the detecting at 334 may include detecting the first acceleration component in the first direction that is within the acceleration detection plane and detecting the second acceleration component in the second direction that is also within the acceleration detection plane and may be oriented differently from, or even perpendicular to, the first direction. In some such examples, the direction of acceleration may be an orientation and/or a direction of the vector sum of the first acceleration component and the second acceleration component.

An example of the magnitude of the direction, angle, or vector orientation, of the circular saw is illustrated in Fig. 16, both as a time plot and in schematic form. As illustrated in the plot of Fig. 16, the direction of acceleration of the circular saw may change substantially as a result of and/or during a kickback condition, which is indicated at 220. As such, the direction of acceleration of the circular saw may be indicative of the kickback condition and/or may be utilized to at least partially establish that the kickback condition exists.

As illustrated in the schematic circular saw 10 of Fig. 16, the detecting at 334 may include detecting the first acceleration component, such as acceleration component aₓ, and detecting the second acceleration component, such as acceleration component a_{z}. In such a configuration, the direction of the acceleration, such as may be established by angle 222, may be determined via and/or from the first acceleration component and the second acceleration component, as indicated at "m" in Fig. 16.

Detecting the angular velocity at 336 may include detecting the angular velocity of the circular saw 10 and/or of user-actuated assembly 100. In some examples, the detecting at 336 may include detecting the angular velocity around and/or about one or more detection axes that extend within the acceleration detection plane.

The detecting at 336 may include detecting the angular velocity in any suitable manner. As an example, and as discussed, the circular saw may include the motion sensor, such as motion sensor 110 that is disclosed herein. In such a configuration, the detecting at 336 may include detecting with, via, and/or utilizing the motion sensor.

In some examples, the detecting at 336 may include detecting a first angular velocity component in the first direction that is within the acceleration detection plane and detecting a second angular velocity component in the second direction that is also within the acceleration detection plane and may be oriented differently from, or even perpendicular to, the first direction. In some such examples, the angular velocity may be a vector sum of the first angular velocity component and the second angular velocity component.

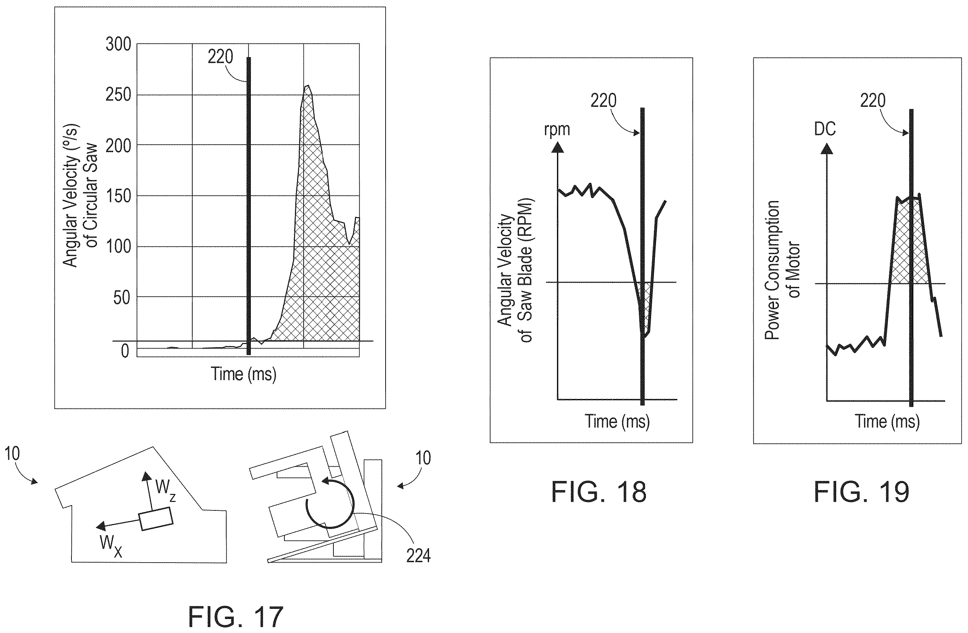

An example of the angular velocity of the circular saw is illustrated in Fig. 17, both as a time plot and in schematic form. As illustrated in the plot of Fig. 17, the angular velocity of the circular saw may change substantially as a result of and/or during a kickback condition, which is indicated at 220. As such, the angular velocity of the circular saw may be indicative of the kickback condition and/or may be utilized to at least partially establish that the kickback condition exists.

As illustrated in the leftmost schematic circular saw 10 of Fig. 17, the detecting at 336 may include detecting the first angular velocity component, such as angular velocity component wₓ, and detecting the second angular velocity component, such as angular velocity component w_{z}. In such a configuration, the angular velocity may be determined via a vector sum of the first angular velocity component and the second angular velocity component, as illustrated at 224 in the rightmost schematic circular saw 10 of Fig. 17.

As discussed, and such as when the handheld power tool includes the circular saw, a handheld circular saw, and/or a semi-stationary circular saw, accelerations and/or rotations of the circular saw that may occur during normal operation of the circular saw and/or that occur when the user moves, repositions, and/or relocates the circular saw may, in certain circumstances, be similar to those experienced during the kickback condition. Thus, and for some circular saws, it may be beneficial also to detect one or more additional parameters, which may be utilized to establish that the circular saw is, indeed, currently being utilized to cut the workpiece and/or that the kickback condition does, indeed, exist.

With this in mind, methods 300 further may include detecting the workpiece contact parameter at 340. In such examples, the determining at 350 further may be based, at least in part, on the detecting at 340. Stated another way, it only may be possible for the kickback condition to exist when the circular saw blade is in contact with the workpiece and/or when the workpiece contact parameter indicates that the circular saw blade is in contact with the workpiece. As such, contact between the circular saw blade and the workpiece may be utilized, within methods 300, as a necessary condition for existence of the kickback condition.

Detecting the workpiece contact parameter at 340 may include detecting any suitable workpiece contact parameter that may be indicative of contact between the circular saw blade and the workpiece. Stated another way, and when the circular saw blade is in contact with the workpiece, the workpiece contact parameter may be within a contact value range. In contrast, and when the circular saw blade is spaced apart from, or not in contact with, the workpiece, the workpiece contact parameter may be within a no-contact value range, which may differ from the contact value range. In such configurations, the determining at 350 may include determining that the kickback condition exists when, or only when, the workpiece contact parameter is within the contact value range. Stated another way, and when methods 300 include the detecting at 340, the workpiece contact parameter having a value that is within the contact value range may be a precondition that must be met prior to determining, or in order to determine, that the kickback condition exists, such as during the determining at 350.

In some examples, the workpiece contact parameter may include and/or be an angular velocity of the circular saw blade, revolutions per minute of the circular saw blade, an angular velocity of the motor shaft, and/or revolutions per minute of the motor shaft during the rotating at 310. In such a configuration, and when the circular saw blade is spaced apart from the workpiece, the circular saw blade may define an average free angular velocity, and the contact value range may include angular velocities that are a threshold angular velocity decrease below the average free angular velocity. Examples of the threshold angular velocity decrease include decreases of at least 20 revolutions per minute (RPM), at least 25 RPM, at least 30 RPM, at least 35 RPM, at least 40 RPM, at least 50 RPM, at least 60 RPM, at least 70 RPM, at least 80 RPM, at least 90 RPM, at least 100 RPM, at least 150 RPM, at least 200 RPM, at least 300 RPM, at least 400 RPM, at least 500 RPM, at least 600 RPM, at least 700 RPM, or at least 800 RPM.

Stated another way, contact between the circular saw blade and the workpiece may generate resistance to rotation of the circular saw blade, thereby lowering the angular velocity of the circular saw blade to a value that is less than the average free angular velocity of the circular saw blade. In addition, and as discussed, the kickback condition may occur as a result of binding and/or pinching of the circular saw blade by the workpiece. This binding and/or pinching further may decrease the angular velocity of the circular saw blade when compared to the average free angular velocity; and this decrease in the angular velocity of the circular saw blade may be utilized to indicate that the circular saw blade is, indeed, in contact with the workpiece.

An example of the angular velocity of the circular saw blade as a function of time is illustrated in Fig. 18. As illustrated therein, the angular velocity of the circular saw blade may decrease substantially as a result of and/or during the kickback condition, which is indicated at 220. As such, the angular velocity of the circular saw blade may be utilized to at least partially establish that the circular saw blade is in contact with the workpiece and/or that the kickback condition exists.

The detecting the angular velocity of the circular saw blade may be accomplished in any suitable manner. As an example, the detecting the angular velocity of the circular saw blade may include measuring the angular velocity of the circular saw blade, such as via utilizing a rotation counter of the circular saw. As another example, the detecting the angular velocity of the circular saw blade may include calculating the angular velocity of the circular saw blade, such as may be based, at least in part, on a motor model of the motor of the circular saw. In some such examples, the calculating the angular velocity of the circular saw blade may include calculating based, at least in part, on a magnitude of an electric current provided to the motor and/or on a magnitude of a voltage of the electric current.

In some examples, the workpiece contact parameter may include and/or be a power consumption of the circular saw blade during the rotating at 310. In such a configuration, the motor may define a maximum rated power consumption, and the contact value range may include a power consumption that is greater than a threshold percentage of the maximum rated power consumption. Examples of the threshold percentage of the maximum rated power consumption include percentages of 50%, 60%, 70%, 80%, or 90%.

Stated another way, contact between the circular saw blade and the workpiece may generate resistance to rotation of the circular saw blade, thereby increasing power consumption of the motor. In addition, and as discussed, the kickback condition may occur as a result of binding and/or pinching of the circular saw blade by the workpiece. This binding and/or pinching further may increase power consumption of the motor; and this power consumption increase may be utilized to indicate that the circular saw blade is, indeed, in contact with the workpiece.

An example of the power consumption of the motor as a function of time is illustrated in Fig. 19. As illustrated therein, the power consumption of the motor may increase substantially as a result of and/or during the kickback condition, which is indicated at 220. As such, the power consumption of the motor may be utilized to at least partially establish that the circular saw blade is in contact with the workpiece and/or that the kickback condition exists.

The detecting the power consumption of the motor may be accomplished in any suitable manner. As an example, the detecting the power consumption of the motor may include calculating the power consumption of the motor based, at least in part, on the magnitude of the electric current provided to the motor and on the magnitude of the voltage of the electric current.

In some examples, the circular saw may include a contact detector, which may be configured to detect contact between the circular saw blade and the workpiece. In some such examples, the contact detector may be configured to produce and/or generate the workpiece contact parameter. Examples of the contact detector include an electrical contact detector, a capacitive contact detector, an electromagnetic contact detector, and/or a mechanical contact detector.

Determining that the kickback condition exists at 350 may include determining, establishing, deciding, and/or concluding that the kickback condition exists in any suitable manner and/or based upon any suitable information, data, and/or parameter. In some examples, the circular saw may include a controller, such as controller 120 of Figs. 1-2 and 11. In some such examples, the controller may be programmed to perform the determining at 350. This may include determining that the kickback condition exists based, at least in part, on the motion of the circular saw as detected during the detecting at 330.

In some examples, the determining at 350 may include determining that the kickback condition exists when, or only when, the magnitude of the acceleration of the circular saw, such as may be determined during the detecting at 332, is greater than a threshold acceleration value. Examples of the threshold acceleration value include accelerations of at least 1 meter per second squared (m/s²), at least 2 m/s², at least 3 m/s², at least 4 m/s², at least 6 m/s², at least 8 m/s², at least 10 m/s², at least 12 m/s², at least 14 m/s², at least 16 m/s², at least 18 m/s², or at least 20 m/s². An example of acceleration that is greater than the threshold acceleration value and indicative of a kickback condition is illustrated by the cross-hatched area in the plot of Fig. 15.

In some examples, the determining at 350 may include determining that the kickback condition exists when, or only when, the direction of the acceleration of the circular saw is within a threshold direction range. Examples of the threshold direction range include directions that are directed rearward relative to a direction-of-cut of the circular saw, that are directed toward trailing edge 28 of the circular saw, and/or that are directed away from the workpiece that the circular saw is being utilized to cut, as illustrated in Fig. 16 and discussed herein.

As a more specific example, the workpiece support may define a workpiece-facing side, a workpiece-opposed side, a leading edge, and a trailing edge. In some such examples, the threshold direction range may be at least partially normal to the workpiece-opposed side of the workpiece support and/or may be at least partially directed toward the trailing edge of the workpiece support. In some such examples, the threshold direction range may be defined within a quadrant that extends between a first vector, which is directed toward the trailing edge of the workpiece support and along the workpiece-opposed side of the workpiece support, and a second vector, which intersects the first vector and is directed normal to the workpiece-opposed side of the workpiece support. An example of such a quadrant is illustrated in Fig. 16 and indicated at 226.

As another more specific example, the threshold direction range may be within a threshold angle range of the direction-of-cut of the circular saw. Such a threshold angle range may be directed away from a user-actuated assembly-facing side of the workpiece and may be indicated at 222 in Fig. 16. Examples of the threshold angle range include angles of at least 80 degrees, at least 90 degrees, at least 100 degrees, at least 110 degrees, at least 120 degrees, at least 130 degrees, at least 140 degrees, at least 150 degrees, at least 160 degrees, at most 200 degrees, at most 180 degrees, at most 170 degrees, at most 160 degrees, at most 150 degrees, at most 140 degrees, at most 130 degrees, at most 120 degrees, at most 110 degrees, and/or at most 100 degrees. The cross-hatched area in the plot of Fig. 16 illustrates an example of threshold direction ranges that are within the threshold angle range.

In some examples, the determining at 350 may include determining that the kickback condition exists when, or only when, the angular velocity of the circular saw is greater than a threshold angular velocity value. Examples of the threshold angular velocity value include angular velocities of at least 1 degree per second (°/s), at least 2 °/s, at least 3 °/s, at least 4 °/s, at least 6 °/s, at least 8 °/s, or at least 10 °/s. An example of angular velocities that are greater than the threshold angular velocity value is illustrated by the cross-hatched area in the plot of Fig 17. In some examples, the threshold angular velocity value may include angular velocities that urge a blade-proximate side of the workpiece support of the circular saw away from the workpiece, as illustrated in Fig. 17.

In some examples, the determining at 350 may include applying a falsification parameter, analysis, and/or constraint, or even a plurality of falsification parameters, analyses, and/or constraints, to the detecting at 330 and/or the detecting at 340. In such examples, the determining at 350 may be based, at least in part, on the falsification parameter, analysis, and/or constraint.

The falsification parameter, analysis, and/or constraint may be selected and/or based upon a configuration, a construction, and/or a use of the handheld power tool or circular saw. As an example, a specific handheld power tool and/or a circular saw may have a different overall configuration, construction, and/or layout, and/or may be used differently when compared to another handheld power tool or circular saw, according to the present disclosure. As such, the handheld power tool and/or the circular saw may experience different accelerations and/or rotations when compared to other handheld power tools or circular saws and/or different accelerations and/or rotations may be indicative of, or necessary for, the kickback condition. As such, certain handheld power tools or circular saws may utilize a, or a different, falsification parameter, analysis, and/or constraint. The falsification parameter may be applied to determine a when a kickback determined through the verification parameter is not a real kickback. Applying the falsification parameter may allow to increase the sensitivity of the verification parameter during the determining. Thus, the kickback detection may be more sensitive to reacting to a real kickback, while not being prone to erroneously reacting to false kickbacks.

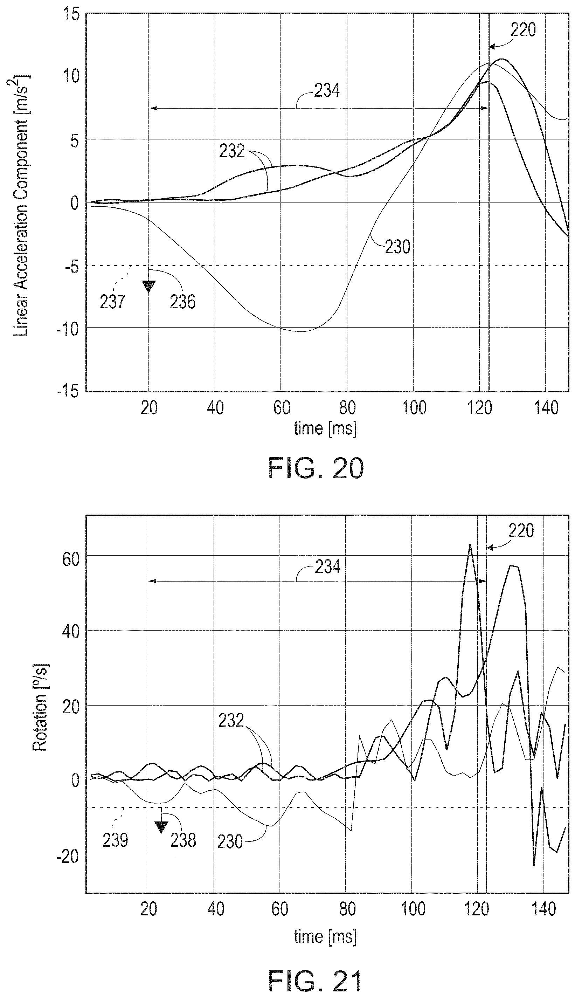

An example of the falsification parameter includes a linear acceleration component of the acceleration of the circular saw, such as may be determined during the detecting at 330. The linear acceleration component may be directed in a specific, a defined, and/or a predetermined linear acceleration direction. Stated differently, the linear acceleration component may be a specific subset of the overall acceleration of the circular saw, with that specific subset being directed in the linear acceleration direction. Examples of the linear acceleration component are illustrated in Fig. 20 and discussed in more detail herein.

The linear acceleration direction may include, or be equivalent to, any suitable specific, defined, and/or predetermined linear acceleration direction. As an example, the linear acceleration direction may be parallel, or at least substantially parallel, to the blade rotation plane of the circular saw blade and/or may be parallel, or at least substantially parallel, to the assembly-facing side of the workpiece support of the circular saw. As another example, the linear acceleration direction may be parallel, or at least substantially parallel, to a longitudinal axis of a kerf that is defined within the workpiece by the circular saw blade, such as during the cutting at 320.

As additional examples, the linear acceleration direction may be within a threshold angular difference of being parallel to the blade rotation plane, being parallel to the assembly-facing side of the workpiece support, and/or being parallel to the kerf. Examples of the threshold angular difference include angular differences of at most 1 degree, at most 2 degrees, at most 4 degrees, at most 6 degrees, at most 8 degrees, at most 10 degrees, at most 12 degrees, at most 14 degrees, at most 16 degrees, and/or at most 18 degrees.

When the determining at 350 includes applying the falsification parameter in the form of the linear acceleration component, the determining at 350 may include determining that the kickback condition exists when, or only when, the linear acceleration component is outside a threshold linear acceleration component range. Stated differently, the linear acceleration component may be within the threshold linear acceleration component range during normal operation of the circular saw to cut the workpiece. However, the linear acceleration component may differ from the threshold linear acceleration component range during, or prior to, the kickback condition. Stated yet another way, the linear acceleration component may be within the threshold linear acceleration component range when a false kickback is detected during normal operation of the circular saw to cut the workpiece. Methods 300 are configured not to initiate the responding at 360 during such false kickback conditions. As such, the linear acceleration component being outside the threshold linear acceleration range may be a necessary condition to determine that the kickback condition exists. Stated differently, the linear acceleration component being within the threshold linear acceleration component range is a necessary condition to determine that a false kickback condition exists and/or that no kickback condition exists.

When the linear acceleration component is outside the threshold linear acceleration component range, a direction of the linear acceleration component may be toward a trailing edge of the circular saw. Alternatively, when the linear acceleration component is within the threshold linear acceleration component range, the direction of the linear acceleration component may be toward a leading edge of the circular saw.

The threshold linear acceleration component range may include and/or be any suitable linear acceleration component value. In the coordinate system that is illustrated in Fig. 16, where positive acceleration values are directed generally toward trailing edge 28 and negative acceleration values are directed generally toward leading edge 24, the linear acceleration component values for which the linear acceleration component is within the threshold linear acceleration component range may have a negative sign (i.e., may be directed toward leading edge 24). In such a coordinate system, an upper bound 237 (as illustrated in Fig. 20) for linear acceleration component values that are within the threshold linear acceleration component range includes linear acceleration values of at most -1.5 meters per second squared (m/s²), at most -2 m/s², at most -2.5 m/s², at most -3 m/s², at most -3.5 m/s², at most -4 m/s², at most -4.5 m/s², at most -5 m/s², at most -5.5 m/s², at most -6 m/s², at least -10 m/s², at least -9.5 m/s², at least -9 m/s², at least -8.5 m/s², at least -8 m/s², at least -7.5 m/s², at least -7 m/s², at least - 6.5 m/s², at least -6 m/s², at least -5.5 m/s², at least -5 m/s², at least -4.5 m/s², and/or at least -4 m/s².

Another example of the falsification parameter includes a linear acceleration direction component of the acceleration of the circular saw, such as may be determined during the detecting at 330. The linear acceleration direction component may be directed in a specific, a defined, and/or a predetermined linear acceleration direction. Stated differently, the linear acceleration direction component may be a specific subset of the overall acceleration direction of the circular saw, with that specific subset being directed in the linear acceleration direction.

The linear acceleration direction component may include, or be equivalent to, any suitable specific, defined, and/or predetermined linear acceleration direction. As an example, the linear acceleration direction component may be toward a leading edge of the circular saw or away from a user of the saw. Stated differently, such a linear acceleration direction component may be directed away from a user-actuated assembly-facing side of the workpiece support, such as indicated at 222 in Fig. 16. In such a coordinate system, linear acceleration direction component values that are within a threshold linear acceleration direction component range include linear acceleration direction values of at most 80 degrees (°), at most 60°, at most 45°, at least -80°, at least -60°, at least -45°, at least -30°, and/or at least 0°.

Another example of the falsification parameter includes an angular velocity component of the angular velocity of the circular saw as measured about an angular velocity axis. The angular velocity axis may include and/or be an axis along which the linear acceleration direction extends and also may be referred to herein as a linear acceleration axis. Stated differently, the angular velocity axis may coincide with the linear acceleration direction. Stated still differently, the angular velocity component may include and/or be a specific subset of the overall angular velocity of the circular saw that is measured about the angular velocity axis. Examples of the angular velocity component are illustrated in Fig. 21 and discussed in more detail herein.

When the determining at 350 includes applying the falsification parameter in the form of the angular velocity component, the determining at 350 may include determining that the kickback condition exists when, or only when, the angular velocity component is outside a threshold angular velocity component range. Stated differently, the angular velocity component may be within the threshold angular velocity component range during normal operation of the circular saw to cut the workpiece. However, the angular velocity component may differ from the threshold angular velocity component range during, or prior to, the kickback condition. Additionally or alternatively, the angular velocity component may be within the threshold angular velocity component range when the kickback condition does not exist and/or when a false kickback is detected during normal operation of the circular saw to cut the workpiece. As such, the angular velocity component being outside the threshold angular velocity component range may be a necessary condition to determine that the kickback condition exists. Stated differently, the angular velocity component being within the threshold angular velocity component range is a necessary condition to determine that a false kickback condition exists.

When the angular velocity component is within the threshold angular velocity component range, rotation about the angular velocity axis and/or about the direction of the cut includes rotation of the arbor of the circular saw and/or of the circular saw blade of the circular saw toward the workpiece. Alternatively, when the linear acceleration component is outside the threshold angular velocity component range, rotation about the angular velocity axis and/or about the direction of cut includes rotation of the arbor of the circular saw and/or of the circular saw blade of the circular saw away from the workpiece.

The threshold angular velocity component range may include any suitable angular velocity component value. In the coordinate system that is illustrated in Fig. 16, where the positive acceleration values are directed generally toward trailing edge 28 and the negative acceleration values are directed generally toward leading edge 24, the angular velocity component values for which the angular velocity component is within the threshold angular velocity component range may have a negative sign for rotation that follows the right-hand rule. In such a coordinate system, an upper boundary 239 (as illustrated in Fig. 21) for angular velocity component values that are within the threshold angular velocity component range includes angular velocities of at most -1.5 degrees per second (°/s), at most -2 °/s, at most -2.5 °/s, at most -3 °/s, at most -3.5 °/s, at most -4 °/s, at most -4.5 °/s, at most -5 °/s, at most -5.5 °/s, at most -6 °/s, at most -6.5 °/s, at most -7 °/s, at most -7.5 °/s, at most -8 °/s, at least -12 °/s, at least -11.5 °/s, at least -11 °/s, at least -10.5 °/s, at least -10 °/s, at least -9.5 °/s, at least -9 °/s, at least -8.5 °/s, at least -8 °/s, at least -7.5 °/s, at least -7 °/s, at least -6.5 °/s, at least -6 °/s, at least -5.5 °/s, at least -5 °/s, at least -4.5 °/s, and/or at least -4 °/s.

In some examples, the falsification parameter, such as the linear acceleration component and/or the angular velocity component, may be determined and/or detected within a detection time window. The detection time window, when utilized, may extend a threshold detection time prior to a kickback time of the handheld power tool. The kickback time may include and/or be a time at which the magnitude of the acceleration of the handheld power tool is greater than the threshold acceleration value, the direction of the acceleration of the handheld power tool is within the threshold direction range, and/or the angular velocity of the handheld power tool is greater than the threshold angular velocity value. The detection time window may have a time duration, which may be defined by the threshold detection time prior to the kickback time. Examples of the time duration include time durations of at least 20 milliseconds (ms), at least 30 ms, at least 40 ms, at least 50 ms, at least 60 ms, at least 70 ms, at least 80 ms, at least 90 ms, at least 100 ms, at least 110 ms, at least 120 ms, at least 130 ms, at least 140 ms, at most 220 ms, at most 210 ms, at most 200 ms, at most 190 ms, at most 180 ms, at most 170 ms, at most 160 ms, at most 150 ms, at most 140 ms, at most 130 ms, at most 120 ms, at most 110 ms, and/or at most 100 ms.

As discussed, the falsification parameter may be utilized, or applied, based upon a configuration of the handheld power tool or circular saw. Examples of falsification parameters determined from a handheld circular saw are illustrated in Figs. 20-21. Fig. 20 illustrates the falsification parameter in the form of the linear acceleration component of the handheld circular saw, while Fig. 21 illustrates the falsification parameter in the form of the angular velocity component of the handheld circular saw.

Figs. 20-21 show examples of falsification parameters (i.e., the linear acceleration component of Fig. 20 and the angular velocity component of Fig. 21) that may be utilized to differentiate between actual and false kickback indications at kickback time 220, such as is discussed herein. In Figs. 20-21, the kickback time (i.e., initiation of a kickback condition, as indicated by the magnitude of the acceleration of the circular saw being greater than the threshold acceleration value, the direction of acceleration of the circular saw being within the threshold direction range, and the angular velocity of the circular saw being greater than the threshold angular velocity value) is indicated at 220. However, as discussed in more detail herein, the handheld circular saw does not always experience kickback at kickback time 220. In Figs. 20-21, an example of normal operation of the handheld circular saw during a chop cut (i.e., no kickback) is indicated by the line at 230, while two examples of actual kickback of the handheld circular saw are indicated by the lines at 232. Also in Figs. 20-21, a detection time window is indicated at 234.

In Fig. 20, negative linear acceleration component values are directed away from the user of the handheld circular saw and/or in the direction of the cut (e.g., toward the leading edge of the circular saw), while positive linear acceleration component values are directed toward the user of the handheld circular saw and/or opposed to the direction of the cut (e.g., toward the trailing edge of the handheld circular saw). As illustrated in Fig. 20, and during normal operation of the handheld circular saw (as indicated at 230), the linear acceleration component is within a threshold linear acceleration component range 236 during at least a subset of detection time window 234. However, as also illustrated in Fig. 20, when a kickback of the handheld circular saw occurs (as indicated at 232), the linear acceleration component is outside threshold linear acceleration component range 236 during an entirety of the detection time window. As such, the linear acceleration component may be indicative of, or utilized to detect, real and/or false kickback of the handheld circular saw.

In Fig. 21, negative angular velocity values rotate the arbor of the handheld circular saw toward the workpiece (i.e., the circular saw or the user-actuated assembly of the circular saw is rotated clockwise when looking in the direction of the cut), while positive angular velocity values rotate the arbor of the handheld circular saw away from the workpiece (i.e., the circular saw or the user-actuated assembly of the circular saw is rotated counter clockwise when looking in the direction of the cut). As illustrated in Fig. 21, and during normal operation of the handheld circular saw performing a chop cut (as indicated at 230), the angular velocity component is within a threshold angular velocity component range 238 during at least a subset of detection time window 234. However, as also illustrated in Fig. 21 and during kickback of the circular saw (as indicated at 232), the angular velocity component is outside threshold angular velocity component range 238 during an entirety of the detection time window. As such, the angular velocity component may be indicative of, or utilized to detect, real and/or false kickback of the handheld circular saw.

Responding to the determination that the kickback condition exists at 360 may include responding in any suitable manner. As an example, the responding at 360 may include ceasing the rotating at 310. In some such examples, the ceasing the rotating may include ceasing supply of an electric current to the motor of the circular saw. In some such examples, the circular saw may include a brake assembly, such as brake assembly 80 of Figs. 1-2, which may be configured to be selectively actuated to cease rotation of the circular saw blade; and the ceasing the rotating additionally or alternatively may include actuating the brake assembly to cease rotation of the circular saw blade.

In some examples, methods 300 may include initiating the responding at 360 responsive to, or only responsive to, a plurality of instances of the determining at 350. Stated another way, a given kickback event may occur during a time interval over which the determining at 350 is performed a plurality of discrete times, and the responding at 360 may include responding when, or only when, the determining at 350 indicates that the kickback condition exists during two or more discrete times of the plurality of discrete times.

As discussed, aspects of handheld power tools 8, according to the present disclosure, are discussed more specifically in the context of circular saws 10. Similarly, aspects of methods 300, according to the present disclosure, also are discussed more specifically in the context of circular saws. This discussion is solely for illustrative purposes, and it is within the scope of the present disclosure that methods 300 may be utilized with other types of handheld power tools, such as discussed herein. With this in mind, a circular saw, as disclosed herein with reference to methods 300, also may be referred to herein as and/or may be a handheld power tool. Similarly, a blade, as disclosed herein with reference to methods 300, also may be referred to herein as and/or may be an implement. In addition, an arbor, as disclosed herein with reference to methods 300, also may be referred to herein as and/or may be an implement holder. Furthermore, a blade rotation plane, as disclosed herein with reference to methods 300, also may be referred to herein as and/or may be an implement motion plane and/or an implement motion axis.

In the present disclosure, several of the illustrative, non-exclusive examples have been discussed and/or presented in the context of flow diagrams, or flow charts, in which the methods are shown and described as a series of blocks, or steps. Unless specifically set forth in the accompanying description, it is within the scope of the present disclosure that the order of the blocks may vary from the illustrated order in the flow diagram, including with two or more of the blocks (or steps) occurring in a different order and/or concurrently. It is also within the scope of the present disclosure that the blocks, or steps, may be implemented as logic, which also may be described as implementing the blocks, or steps, as logics. In some applications, the blocks, or steps, may represent expressions and/or actions to be performed by functionally equivalent circuits or other logic devices. The illustrated blocks may, but are not required to, represent executable instructions that cause a computer, processor, and/or other logic device to respond, to perform an action, to change states, to generate an output or display, and/or to make decisions.

As used herein, the term "and/or" placed between a first entity and a second entity means one of (1) the first entity, (2) the second entity, and (3) the first entity and the second entity. Multiple entities listed with "and/or" should be construed in the same manner, i.e., "one or more" of the entities so conjoined. Other entities may optionally be present other than the entities specifically identified by the "and/or" clause, whether related or unrelated to those entities specifically identified. Thus, as a non-limiting example, a reference to "A and/or B," when used in conjunction with open-ended language such as "comprising" may refer, in one embodiment, to A only (optionally including entities other than B); in another embodiment, to B only (optionally including entities other than A); in yet another embodiment, to both A and B (optionally including other entities). These entities may refer to elements, actions, structures, steps, operations, values, and the like.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one embodiment, to at least one, optionally including more than one, A, with no B present (and optionally including entities other than B); in another embodiment, to at least one, optionally including more than one, B, with no A present (and optionally including entities other than A); in yet another embodiment, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

In the event that any patents, patent applications, or other references are incorporated by reference herein and (1) define a term in a manner that is inconsistent with and/or (2) are otherwise inconsistent with, either the non-incorporated portion of the present disclosure or any of the other incorporated references, the non-incorporated portion of the present disclosure shall control, and the term or incorporated disclosure therein shall only control with respect to the reference in which the term is defined and/or the incorporated disclosure was present originally.

As used herein the terms "adapted" and "configured" mean that the element, component, or other subject matter is designed and/or intended to perform a given function. Thus, the use of the terms "adapted" and "configured" should not be construed to mean that a given element, component, or other subject matter is simply "capable of" performing a given function but that the element, component, and/or other subject matter is specifically selected, created, implemented, utilized, programmed, and/or designed for the purpose of performing the function. It is also within the scope of the present disclosure that elements, components, and/or other recited subject matter that is recited as being adapted to perform a particular function may additionally or alternatively be described as being configured to perform that function, and vice versa.

As used herein, the phrase, "for example," the phrase, "as an example," and/or simply the term "example," when used with reference to one or more components, features, details, structures, embodiments, and/or methods according to the present disclosure, are intended to convey that the described component, feature, detail, structure, embodiment, and/or method is an illustrative, non-exclusive example of components, features, details, structures, embodiments, and/or methods according to the present disclosure. Thus, the described component, feature, detail, structure, embodiment, and/or method is not intended to be limiting, required, or exclusive/exhaustive; and other components, features, details, structures, embodiments, and/or methods, including structurally and/or functionally similar and/or equivalent components, features, details, structures, embodiments, and/or methods, are also within the scope of the present disclosure.

As used herein, "at least substantially," when modifying a degree or relationship, may include not only the recited "substantial" degree or relationship, but also the full extent of the recited degree or relationship. A substantial amount of a recited degree or relationship may include at least 75% of the recited degree or relationship. For example, an object that is at least substantially formed from a material includes objects for which at least 75% of the objects are formed from the material and also includes objects that are completely formed from the material. As another example, a first length that is at least substantially as long as a second length includes first lengths that are within 75% of the second length and also includes first lengths that are as long as the second length.

## Claims

1. A method of detecting a kickback condition of a circular saw that includes a circular saw blade, **characterised in that** the saw comprises
a workpiece support and a user-actuated assembly configured to rotate relative to the workpiece support to cut a workpiece, the method comprising:
rotating the circular saw blade within a blade rotation plane;
detecting motion of the user-actuated assembly, wherein the detecting motion includes at least one of:
(a-i) detecting a magnitude of an acceleration of the user-actuated assembly within an acceleration detection plane that is at least one of parallel to the blade rotation plane and coextensive with the blade rotation plane;
(a-ii) detecting a direction of the acceleration of the user-actuated assembly within the acceleration detection plane; and
(a-iii) detecting an angular velocity of the user-actuated assembly about at least one rotation detection axis that extends within the acceleration detection plane; and
determining that the kickback condition exists based, at least in part, on a verification parameter that includes the motion of the user-actuated assembly, wherein the determining includes determining that the kickback condition exists, in case of:
(b-i) detecting the magnitude of an acceleration of the user-actuated assembly (a-i): when the magnitude of the acceleration of the user-actuated assembly is greater than a threshold acceleration value;
(b-ii) detecting the direction of the acceleration of the user-actuated assembly (a-ii): when the direction of the acceleration of the user-actuated assembly is within a given direction range; and/or
(b-iii) detecting the angular velocity of the user-actuated assembly (a-iii): when the angular velocity of the user-actuated assembly is greater than a threshold angular velocity value.

2. The method of claim 1, wherein the detecting further includes detecting a workpiece contact parameter, wherein, when the circular saw blade is in contact with the workpiece, the workpiece contact parameter is within a contact value range, wherein, when the circular saw blade is spaced apart from the workpiece, the workpiece contact parameter is within a no-contact value range, and further wherein the verification parameter further includes the workpiece contact parameter and/or wherein the method includes determining that the kickback condition exists when the workpiece contact parameter is within the contact value range,
wherein the workpiece contact parameter in particular includes an angular velocity of the circular saw blade during the rotating, wherein, when the circular saw blade is spaced apart from the workpiece, the circular saw blade defines an average free angular velocity, and further wherein the contact value range includes angular velocities that are a threshold angular velocity decrease below the average free angular velocity.

3. The method of claim 2, wherein the workpiece contact parameter includes a power consumption of the circular saw during the rotating, wherein a motor of the circular saw defines a maximum rated power consumption, and further wherein the contact value range includes a power consumption that is greater than a threshold percentage of the maximum rated power consumption.

4. The method of any of claims 2-3, wherein the circular saw includes a contact detector configured to detect contact between the circular saw blade and the workpiece, and further wherein the contact detector is configured to generate the workpiece contact parameter.

5. The method of any of claims 1-4, wherein the detecting the magnitude of the acceleration includes detecting a first acceleration component in a first direction that is within the acceleration detection plane and detecting a second acceleration component in a second direction that is perpendicular to the first direction and within the acceleration detection plane, and wherein the magnitude of the acceleration is determined from the first acceleration component and the second acceleration component,
wherein the detecting the direction of the acceleration in particular includes detecting the first acceleration component and detecting the second acceleration component, and wherein the direction of the acceleration is a direction of the vector sum of the first acceleration component and the second acceleration component.

6. The method of claim 5, wherein the detecting the angular velocity of the user-actuated assembly includes detecting a first angular velocity component about the first direction and detecting a second angular velocity component about the second direction, and wherein the angular velocity of the user-actuated assembly is a vector sum of the first angular velocity component and the second angular velocity component.

7. The method of any of claims 1-6, wherein the threshold acceleration value is at least 1 meter per second squared (m/s²), in particular at least 2 m/s², in particular at least 4 m/s², in particular at least 6 m/s², in particular at least 8 m/s², in particular at least 10 m/s².

8. The method of any of claims 1-7, wherein the given direction range is at least one of:
(i) directed rearward relative to a direction-of-cut of the circular saw; and
(ii) directed away from the workpiece that the circular saw is being utilized to cut, wherein the given direction range in particular is within a threshold angle range of a direction-of-cut of the circular saw, wherein the threshold angle range is directed away from a user-actuated assembly-facing side of a workpiece support of the circular saw and is at least 80 degrees and at most 180 degrees, wherein the workpiece support defines a workpiece-facing side, a workpiece-opposed side, a leading edge, and a trailing edge, and further wherein at least one of:
(i) the given direction range is at least partially normal to the workpiece-opposed side of the workpiece support;
(ii) the given direction range is at least partially toward the trailing edge of the workpiece support; and
(iii) the given direction range is defined within a quadrant that extends between a first vector, which is directed toward the trailing edge of the workpiece support and along the workpiece-opposed side of the workpiece support, and a second vector, which intersects the first vector and is directed normal to the workpiece-opposed side of the workpiece support.

9. The method of any of claims 1-8, wherein the threshold angular velocity value is at least 1 degree per second (°/s), in particular at least 2 °/s, in particular at least 4 °/s, in particular at least 6 °/s, in particular at least 8 °/s, in particular at least 10 °/s.

10. The method of any of claims 1-9, wherein the threshold angular velocity value includes angular velocities that urge a blade-proximate side of the workpiece support of the circular saw away from the workpiece.

11. The method of any of claims 1-10, wherein the method further includes applying a falsification parameter, further wherein the determining is based, at least in part, on the falsification parameter,
wherein the falsification parameter in particular includes at least one of:
(a) a linear acceleration component of an acceleration of the circular saw, wherein the linear acceleration component is in a linear acceleration direction that is at least one of:
(i) parallel to a blade rotation plane of the circular saw blade,
(ii) parallel to an assembly-facing side of the workpiece support of the circular saw; and
(iii) parallel to a longitudinal axis of a kerf defined within the workpiece by the circular saw blade; and
(b) an angular velocity component of an angular velocity of the circular saw, wherein the angular velocity component is about an angular velocity axis,
wherein the determining in particular includes one of:
(i) determining that the kickback condition exists when the linear acceleration component is outside a threshold linear acceleration component range;
(ii) determining that the kickback condition does not exist when the linear acceleration component is within the threshold linear acceleration component range,
(iii) determining that the kickback condition exists when the angular velocity component is outside a threshold angular velocity component range; and
(iv) determining that the kickback condition does not exist when the angular velocity component is within the threshold angular velocity component range,
wherein the linear acceleration direction in particular coincides with the angular velocity axis, wherein the angular velocity component is in particular within the threshold angular velocity component range when rotation about a linear acceleration axis, which extends in the linear acceleration direction, includes rotation of an arbor of the circular saw toward the workpiece support of the circular saw.

12. The method of claim 11, wherein the falsification parameter is determined within a detection time window,
wherein the detection time window in particular extends a threshold detection time prior to a kickback time at which at least one of:
(i) the acceleration of the circular saw is greater than the threshold acceleration value;
(ii) the direction of the acceleration of the circular saw is within the given direction range; and
(iii) the angular velocity of the circular saw is greater than the threshold angular velocity value,
wherein in particular at least one of:
(i) the linear acceleration component is within a threshold linear acceleration component range during at least a subset of the detection time window; and
(ii) the angular velocity component is within a threshold angular velocity component range during at least a subset of the detection time window.

13. A circular saw, comprising:
a user-actuated assembly including:
(i) a motion sensor configured to detect motion of the user-actuated assembly within an acceleration detection plane that is at least one of parallel to the blade rotation plane and coextensive with the blade rotation plane, and to generate a motion signal indicative of the motion of the user-actuated assembly; and
(ii) a controller programmed to control operation of the circular saw based, at least in part, on the motion signal, wherein the controller is programmed to perform the method of any of claims 1-12;
a workpiece support configured to position a workpiece and the circular saw relative to one another when the workpiece is cut by the circular saw; and
a pivot, wherein the user-actuated assembly is pivotally coupled to the workpiece support via the pivot, and further wherein the user-actuated assembly and the workpiece support are configured to operatively rotate, relative to one another, about a pivot axis of the pivot to cut the workpiece.

14. The circular saw of claim 13, wherein the motion sensor is positioned in a distance from the pivot axis, wherein the distance is between 1 cm and 20 cm, in particular between 6 cm and 18 cm, in particular between 8 cm and 16 cm, wherein the motion sensor in particular is oriented such that an acceleration detection axis extends substantially perpendicular to the pivot axis

15. The circular saw of any of claims 13-14, wherein the user-actuated assembly comprises a circuit board, wherein the circuit board includes both the controller and the motion sensor.

## Patentansprüche

1. Verfahren zum Erkennen eines Rückschlagzustands einer Kreissäge, die ein Kreissägeblatt beinhaltet, **dadurch gekennzeichnet, dass**
die Kreissäge eine Werkstückauflage und eine vom Benutzer betätigte Baugruppe umfasst, die so ausgelegt ist, dass sie sich relativ zur Werkstückauflage dreht, um ein Werkstück zu schneiden, wobei das Verfahren Folgendes umfasst:
Drehen des Kreissägeblatts innerhalb einer Sägeblatt-Drehebene;
Erfassen einer Bewegung der vom Benutzer betätigten Baugruppe, wobei das Erfassen der Bewegung mindestens eines der folgenden Elemente umfasst:
(a-i) Erfassen einer Größe einer Beschleunigung der vom Benutzer betätigten Baugruppe innerhalb einer Beschleunigungserfassungsebene, die entweder parallel zur Sägeblatt-Drehebene verläuft oder sich mit der Sägeblatt-Drehebene deckt;
(a-ii) Erfassen einer Richtung der Beschleunigung der vom Benutzer betätigten Baugruppe innerhalb der Beschleunigungserfassungsebene; und
(a-iii) Erfassen einer Winkelgeschwindigkeit der vom Benutzer betätigten Baugruppe um mindestens eine Rotationserfassungsachse, die sich innerhalb der Beschleunigungserfassungsebene erstreckt; und
Feststellen, dass der Rückschlagzustand vorliegt, zumindest teilweise auf Grundlage eines Verifizierungsparameters, der die Bewegung der vom Benutzer betätigten Baugruppe beinhaltet, wobei das Feststellen ein Feststellen beinhaltet, dass der Rückschlagzustand vorliegt, im Falle von:
(b-i) Erfassen der Größe einer Beschleunigung der vom Benutzer betätigten Baugruppe (a-i): wenn die Größe der Beschleunigung der vom Benutzer betätigten Baugruppe größer ist als ein Beschleunigungsschwellenwert;
(b-ii) Erfassen der Richtung der Beschleunigung der vom Benutzer betätigten Baugruppe (a-ii): wenn die Richtung der Beschleunigung der vom Benutzer betätigten Baugruppe innerhalb eines vorgegebenen Richtungsbereichs liegt; und/oder
(b-iii) Erfassen der Winkelgeschwindigkeit der vom Benutzer betätigten Baugruppe (a-iii): wenn die Winkelgeschwindigkeit der vom Benutzer betätigten Baugruppe größer ist als ein Winkelgeschwindigkeitsschwellenwert.

2. Verfahren nach Anspruch 1, wobei das Erfassen ferner das Erfassen eines Werkstückkontaktparameters beinhaltet, wobei, wenn das Kreissägeblatt mit dem Werkstück in Kontakt steht, der Werkstückkontaktparameter innerhalb eines Kontaktwertbereichs liegt, wobei, wenn das Kreissägeblatt vom Werkstück beabstandet ist, der Werkstückkontaktparameter innerhalb eines Nichtkontakt-Wertebereichs liegt, und wobei der Verifizierungsparameter ferner den Werkstückkontaktparameter beinhaltet und/oder wobei das Verfahren das Feststellen umfasst, dass der Rückschlagzustand vorliegt, wenn der Werkstückkontaktparameter innerhalb des Kontakt-Wertebereichs liegt,
wobei der Werkstückkontaktparameter insbesondere eine Winkelgeschwindigkeit des Kreissägeblatts während des Drehens beinhaltet, wobei das Kreissägeblatt, wenn es vom Werkstück beabstandet ist, eine durchschnittliche freie Winkelgeschwindigkeit definiert, und wobei ferner der Kontaktwertbereich Winkelgeschwindigkeiten beinhaltet, die eine Schwellenwert-Winkelgeschwindigkeitsabnahme unterhalb der durchschnittlichen freien Winkelgeschwindigkeit liegen.

3. Verfahren nach Anspruch 2, wobei der Werkstückkontaktparameter eine Leistungsaufnahme der Kreissäge während des Drehens beinhaltet, wobei ein Motor der Kreissäge eine maximale Nennleistungsaufnahme definiert und wobei ferner der Kontaktwertbereich eine Leistungsaufnahme beinhaltet, die größer ist als ein Schwellenprozentsatz der maximalen Nennleistungsaufnahme.

4. Verfahren nach einem der Ansprüche 2 bis 3, wobei die Kreissäge einen Kontaktdetektor beinhaltet, der so ausgestaltet ist, dass er einen Kontakt zwischen dem Kreissägeblatt und dem Werkstück erfasst, und wobei der Kontaktdetektor ferner so ausgestaltet ist, dass er den Werkstückkontaktparameter erzeugt.

5. Verfahren nach einem der Ansprüche 1 bis 4, wobei das Erfassen der Größe der Beschleunigung das Erfassen einer ersten Beschleunigungskomponente in einer ersten Richtung, die innerhalb der Beschleunigungserfassungsebene liegt, und das Erfassen einer zweiten Beschleunigungskomponente in einer zweiten Richtung, die senkrecht zur ersten Richtung und innerhalb der Beschleunigungserfassungsebene liegt, beinhaltet, und wobei die Größe der Beschleunigung aus der ersten Beschleunigungskomponente und der zweiten Beschleunigungskomponente bestimmt wird,
wobei das Erfassen der Richtung der Beschleunigung insbesondere das Erfassen der ersten Beschleunigungskomponente und das Erfassen der zweiten Beschleunigungskomponente umfasst und wobei die Richtung der Beschleunigung eine Richtung der Vektorsumme aus der ersten Beschleunigungskomponente und der zweiten Beschleunigungskomponente ist.

6. Verfahren nach Anspruch 5, wobei das Erfassen der Winkelgeschwindigkeit der vom Benutzer betätigten Baugruppe das Erfassen einer ersten Winkelgeschwindigkeitskomponente um die erste Richtung und das Erfassen einer zweiten Winkelgeschwindigkeitskomponente um die zweite Richtung beinhaltet, und wobei die Winkelgeschwindigkeit der vom Benutzer betätigten Baugruppe eine Vektorsumme aus der ersten Winkelgeschwindigkeitskomponente und der zweiten Winkelgeschwindigkeitskomponente ist.

7. Verfahren nach einem der Ansprüche 1 bis 6, wobei der Beschleunigungsschwellenwert mindestens 1 Meter pro Sekunde im Quadrat (m/s²) beträgt, insbesondere mindestens 2 m/s², insbesondere mindestens 4 m/s², insbesondere mindestens 6 m/s², insbesondere mindestens 8 m/s², insbesondere mindestens 10 m/s².

8. Verfahren nach einem der Ansprüche 1 bis 7, wobei der vorgegebene Richtungsbereich mindestens einer der folgenden ist:
(i) relativ zur Schnittrichtung der Kreissäge nach hinten gerichtet; und
(ii) von dem Werkstück weggerichtet, das mit der Kreissäge geschnitten wird, wobei der vorgegebene Richtungsbereich insbesondere innerhalb eines Schwellenwinkelbereichs einer Schnittrichtung der Kreissäge liegt, wobei der Schwellenwinkelbereich von einer benutzerbetätigten, der Baugruppe zugewandten Seite einer Werkstückauflage der Kreissäge weggerichtet ist und mindestens 80 Grad und höchstens 180 Grad beträgt, wobei die Werkstückauflage eine dem Werkstück zugewandte Seite, eine dem Werkstück abgewandte Seite, eine Vorderkante und eine Hinterkante definiert, und wobei ferner mindestens eines der folgenden Merkmale vorliegt:
(i) der vorgegebene Richtungsbereich ist zumindest teilweise senkrecht zur dem Werkstück abgewandten Seite der Werkstückauflage;
(ii) der vorgegebene Richtungsbereich weist zumindest teilweise in Richtung der Hinterkante der Werkstückauflage; und
(iii) der vorgegebene Richtungsbereich ist innerhalb eines Quadranten definiert, der sich zwischen einem ersten Vektor, der zur Hinterkante der Werkstückauflage hin und entlang der dem Werkstück abgewandten Seite der Werkstückauflage gerichtet ist, und einem zweiten Vektor erstreckt, der den ersten Vektor schneidet und senkrecht zur dem Werkstück abgewandten Seite der Werkstückauflage gerichtet ist.

9. Verfahren nach einem der Ansprüche 1 bis 8, wobei der Winkelgeschwindigkeitsschwellenwert mindestens 1 Grad pro Sekunde (°/s) beträgt, insbesondere mindestens 2 °/s, insbesondere mindestens 4 °/s, insbesondere mindestens 6 °/s, insbesondere mindestens 8 °/s, insbesondere mindestens 10 °/s.

10. Verfahren nach einem der Ansprüche 1 bis 9, wobei der Winkelgeschwindigkeitsschwellenwert Winkelgeschwindigkeiten beinhaltet, die eine sägeblattnahe Seite der Werkstückauflage der Kreissäge vom Werkstück wegdrängen.

11. Verfahren nach einem der Ansprüche 1 bis 10, wobei das Verfahren ferner das Anwenden eines Falsifizierungsparameters umfasst, wobei das Feststellen ferner zumindest teilweise auf dem Falsifizierungsparameter basiert,
wobei der Falsifizierungsparameter insbesondere mindestens eines der folgenden Elemente beinhaltet:
(a) eine lineare Beschleunigungskomponente einer Beschleunigung der Kreissäge, wobei die lineare Beschleunigungskomponente in einer linearen Beschleunigungsrichtung liegt, die mindestens eine der folgenden ist:
(i) parallel zu einer Rotationsebene des Kreissägeblatts,
(ii) parallel zu einer der Baugruppe zugewandten Seite der Werkstückauflage der Kreissäge; und
(iii) parallel zu einer Längsachse eines durch das Kreissägeblatt im Werkstück definierten Sägeschnitts; und
(b) eine Winkelgeschwindigkeitskomponente einer Winkelgeschwindigkeit der Kreissäge, wobei die Winkelgeschwindigkeitskomponente um eine Winkelgeschwindigkeitsachse verläuft,
wobei das Feststellen insbesondere eines der folgenden Schritte umfasst:
(i) Feststellen, dass der Rückschlagzustand vorliegt, wenn die lineare Beschleunigungskomponente außerhalb eines Schwellenwertbereichs für die lineare Beschleunigungskomponente liegt;
(ii) Feststellen, dass der Rückschlagzustand nicht vorliegt, wenn die lineare Beschleunigungskomponente innerhalb des Schwellenwertbereichs für die lineare Beschleunigungskomponente liegt,
(iii) Feststellen, dass der Rückschlagzustand vorliegt, wenn die Winkelgeschwindigkeitskomponente außerhalb eines Schwellenwertbereichs für die Winkelgeschwindigkeitskomponente liegt; und
(iv) Feststellen, dass der Rückschlagzustand nicht vorliegt, wenn die Winkelgeschwindigkeitskomponente innerhalb des Schwellenwertbereichs für die Winkelgeschwindigkeitskomponente liegt,
wobei die Richtung der linearen Beschleunigung insbesondere mit der Winkelgeschwindigkeitsachse zusammenfällt, wobei die Winkelgeschwindigkeitskomponente insbesondere innerhalb des Schwellenwertbereichs für die Winkelgeschwindigkeitskomponente liegt, wenn eine Drehung um eine lineare Beschleunigungsachse, die sich in Richtung der linearen Beschleunigung erstreckt, eine Drehung einer Spindel der Kreissäge in Richtung der Werkstückauflage der Kreissäge beinhaltet.

12. Verfahren nach Anspruch 11, wobei der Falsifizierungsparameter innerhalb eines Erfassungszeitfensters ermittelt wird,
wobei sich das Erfassungszeitfenster insbesondere über eine Schwellen-Erfassungszeit vor einem Rückschlagzeitpunkt erstreckt, zu der mindestens eines der folgenden Ereignisse eintritt:
(i) die Beschleunigung der Kreissäge ist größer als der Beschleunigungsschwellenwert;
(ii) die Richtung der Beschleunigung der Kreissäge liegt innerhalb des vorgegebenen Richtungsbereichs; und
(iii) die Winkelgeschwindigkeit der Kreissäge ist größer als der Winkelgeschwindigkeitsschwellenwert,
wobei insbesondere mindestens eines der folgenden Kriterien erfüllt ist:
(i) die lineare Beschleunigungskomponente liegt während zumindest eines Teilzeitraums des Erfassungszeitfensters innerhalb eines Schwellenwertbereichs für die lineare Beschleunigungskomponente; und
(ii) die Winkelgeschwindigkeitskomponente liegt während zumindest eines Teilzeitraums des Erfassungszeitfensters innerhalb eines Schwellenwertbereichs für die Winkelgeschwindigkeitskomponente.

13. Eine Kreissäge, umfassend:
eine vom Benutzer betätigte Baugruppe, die Folgendes beinhaltet:
(i) einen Bewegungssensor, der so ausgestaltet ist, dass er eine Bewegung der vom Benutzer betätigten Baugruppe innerhalb einer Beschleunigungserfassungsebene erfasst, die zumindest entweder parallel zur Sägeblatt-Drehebene verläuft oder sich mit der Sägeblatt-Drehebene deckt, und ein Bewegungssignal erzeugt, das die Bewegung der vom Benutzer betätigten Baugruppe anzeigt; und
(ii) eine Steuerung, die so programmiert ist, dass sie den Betrieb der Kreissäge zumindest teilweise auf Grundlage des Bewegungssignals steuert, wobei die Steuerung so programmiert ist, dass sie das Verfahren gemäß einem der Ansprüche 1 bis 12 ausführt;
eine Werkstückauflage, die so ausgestaltet ist, dass sie ein Werkstück und die Kreissäge relativ zueinander positioniert, wenn das Werkstück von der Kreissäge geschnitten wird; und
ein Drehgelenk, wobei die vom Benutzer betätigte Baugruppe über das Drehgelenk drehbar mit der Werkstückauflage verbunden ist und wobei ferner die vom Benutzer betätigte Baugruppe und die Werkstückauflage so ausgestaltet sind, dass sie sich relativ zueinander um eine Drehachse des Drehgelenks drehen, um das Werkstück zu schneiden.

14. Kreissäge nach Anspruch 13, wobei der Bewegungssensor in einem Abstand zur Drehachse angeordnet ist, wobei der Abstand zwischen 1 cm und 20 cm, insbesondere zwischen 6 cm und 18 cm, insbesondere zwischen 8 cm und 16 cm beträgt, wobei der Bewegungssensor insbesondere so ausgerichtet ist, dass sich eine Beschleunigungserfassungsachse im Wesentlichen senkrecht zur Drehachse erstreckt

15. Kreissäge nach einem der Ansprüche 13 bis 14, wobei die vom Benutzer betätigte Baugruppe eine Leiterplatte umfasst, wobei die Leiterplatte sowohl die Steuerung als auch den Bewegungssensor beinhaltet.

## Revendications

1. Procédé de détection d'un état de recul d'une scie circulaire qui comporte une lame de scie circulaire, **caractérisé en ce que** la scie comprend : un support de pièce et un ensemble actionné par l'utilisateur configuré pour tourner par rapport au support de pièce afin de couper une pièce, le procédé comprenant de :
faire tourner la lame de scie circulaire à l'intérieur d'un plan de rotation de lame ;
détecter un mouvement de l'ensemble actionné par l'utilisateur, dans lequel le mouvement de détection comporte au moins un parmi :
(a-i) détecter une grandeur d'une accélération de l'ensemble actionné par l'utilisateur à l'intérieur d'un plan de détection d'accélération qui présente au moins un parmi être parallèle au plan de rotation de lame et s'étendant conjointement avec le plan de rotation de lame ;
(a-ii) détecter une direction de l'accélération de l'ensemble actionné par l'utilisateur dans le plan de détection d'accélération ; et
(a-iii) détecter une vitesse angulaire de l'ensemble actionné par l'utilisateur autour d'au moins un axe de détection de rotation qui s'étend à l'intérieur du plan de détection d'accélération ; et
déterminer que l'état de recul existe sur la base, au moins en partie, d'un paramètre de vérification qui inclut le mouvement de l'ensemble actionné par l'utilisateur, dans lequel la détermination inclut de déterminer que l'état de recul existe, en cas de :
b-i) détection de la grandeur d'une accélération de l'ensemble actionné par l'utilisateur (a-i) : lorsque la grandeur de l'accélération de l'ensemble actionné par l'utilisateur est supérieure à une valeur d'accélération de seuil ;
b-ii) détection de la direction de l'accélération de l'ensemble actionné par l'utilisateur (a-ii) : lorsque la direction de l'accélération de l'ensemble actionné par l'utilisateur est dans les limites d'une plage de directions donnée ; et/ou
b-iii) détection de la vitesse angulaire de l'ensemble actionné par l'utilisateur (a-iii) : lorsque la vitesse angulaire de l'ensemble actionné par l'utilisateur est supérieure à une valeur de vitesse angulaire de seuil.

2. Procédé selon la revendication 1, dans lequel la détection inclut en outre de détecter un paramètre de contact avec la pièce, dans lequel, lorsque la lame de scie circulaire est en contact avec la pièce, le paramètre de contact avec la pièce est dans les limites d'une plage de valeurs de contact, dans lequel, lorsque la lame de scie circulaire est espacée de la pièce, le paramètre de contact avec la pièce est dans les limites d'une plage de valeurs d'absence de contact, et en outre dans lequel le paramètre de vérification inclut en outre le paramètre de contact avec la pièce et/ou dans lequel le procédé inclut de déterminer que l'état de recul existe lorsque le paramètre de contact avec la pièce est dans les limites de la plage de valeurs de contact,
dans lequel le paramètre de contact avec la pièce inclut en particulier une vitesse angulaire de la lame de scie circulaire pendant la rotation, dans lequel, lorsque la lame de scie circulaire est espacée de la pièce, la lame de scie circulaire définit une vitesse angulaire libre moyenne, et en outre dans lequel la plage de valeurs de contact inclut des vitesses angulaires qui sont une diminution de la vitesse angulaire de seuil en dessous de la vitesse angulaire libre moyenne.

3. Procédé selon la revendication 2, dans lequel le paramètre de contact avec la pièce inclut une consommation d'énergie de la scie circulaire pendant la rotation, dans lequel un moteur de la scie circulaire définit une consommation d'énergie nominale maximale, et en outre dans lequel la plage de valeurs de contact inclut une consommation d'énergie qui est supérieure à un pourcentage de seuil de la consommation d'énergie nominale maximale.

4. Procédé selon l'une quelconque des revendications 2 à 3, dans lequel la scie circulaire comporte un détecteur de contact configuré pour détecter un contact entre la lame de scie circulaire et la pièce, et en outre dans lequel le détecteur de contact est configuré pour générer le paramètre de contact avec la pièce.

5. Procédé selon l'une quelconque des revendications 1 à 4, dans lequel la détection de la grandeur de l'accélération inclut de détecter une première composante d'accélération dans une première direction qui est à l'intérieur du plan de détection d'accélération et de détecter une seconde composante d'accélération dans une seconde direction qui est perpendiculaire à la première direction et à l'intérieur du plan de détection d'accélération, et dans lequel la grandeur de l'accélération est déterminée à partir de la première composante d'accélération et de la seconde composante d'accélération,
dans lequel la détection de la direction de l'accélération inclut en particulier de détecter la première composante d'accélération et de détecter la seconde composante d'accélération, et dans lequel la direction de l'accélération est une direction de la somme vectorielle de la première composante d'accélération et de la seconde composante d'accélération.

6. Procédé selon la revendication 5, dans lequel la détection de la vitesse angulaire de l'ensemble actionné par l'utilisateur inclut de détecter une première composante de vitesse angulaire autour de la première direction et de détecter une seconde composante de vitesse angulaire autour de la seconde direction, et dans lequel la vitesse angulaire de l'ensemble actionné par l'utilisateur est une somme vectorielle de la première composante de vitesse angulaire et de la seconde composante de vitesse angulaire.

7. Procédé selon l'une quelconque des revendications 1 à 6, dans lequel la valeur d'accélération de seuil est d'au moins 1 mètre par seconde carré (m/s²), en particulier d'au moins 2 m/s², en particulier d'au moins 4 m/s², en particulier d'au moins 6 m/s², en particulier d'au moins 8 m/s², en particulier d'au moins 10 m/s².

8. Procédé selon l'une quelconque des revendications 1 à 7, dans lequel la plage de directions donnée est au moins un parmi :
(i) dirigée vers l'arrière par rapport à une direction de coupe de la scie circulaire ; et
(ii) dirigée en s'éloignant de la pièce que la scie circulaire est utilisée pour couper, dans lequel la plage de directions donnée est en particulier à l'intérieur d'une plage d'angles de seuil d'une direction de coupe de la scie circulaire, dans lequel la plage d'angles de seuil est dirigée en s'éloignant d'un côté dirigé vers l'ensemble actionné par l'utilisateur d'un support de pièce de la scie circulaire et est d'au moins 80 degrés et d'au plus 180 degrés,
dans lequel le support de pièce définit un côté dirigé vers la pièce, un côté opposé à la pièce, un bord avant, et un bord arrière, et en outre dans lequel au moins un parmi :
i) la plage de directions donnée est au moins partiellement normale au côté opposé à la pièce du support de pièce ;
(ii) la plage de directions donnée est au moins partiellement dirigée vers le bord de arrière du support de pièce ; et
(iii) la plage de directions donnée est définie dans un quadrant qui s'étend entre un premier vecteur, qui est dirigé vers le bord arrière du support de pièce et le long du côté opposé à la pièce du support de pièce, et un second vecteur, qui coupe le premier vecteur et est dirigé orthogonalement au côté opposé à la pièce du support de pièce.

9. Procédé selon l'une quelconque des revendications 1 à 8, dans lequel la valeur de vitesse angulaire de seuil est d'au moins 1 degré par seconde (°/s), en particulier d'au moins 2°/s, en particulier d'au moins 4°/s, en particulier d'au moins 6°/s, en particulier d'au moins 8°/s, en particulier d'au moins 10°/s.

10. Procédé selon l'une quelconque des revendications 1 à 9, dans lequel la valeur de vitesse angulaire de seuil inclut des vitesses angulaires qui poussent un côté situé près de la lame du support de pièce de la scie circulaire en l'éloignant de la pièce.

11. Procédé selon l'une quelconque des revendications 1 à 10, dans lequel le procédé comporte en outre d'appliquer un paramètre de falsification, en outre dans lequel la détermination est basée, au moins en partie, sur le paramètre de falsification,
dans lequel le paramètre de falsification inclut en particulier au moins un parmi :
a) une composante d'accélération linéaire d'une accélération de la scie circulaire, dans lequel la composante d'accélération linéaire est située dans une direction d'accélération linéaire qui est au moins un parmi :
(i) parallèle à un plan de rotation de lame de la lame de scie circulaire,
(ii) parallèle à un côté dirigé vers l'ensemble du support de pièce de la scie circulaire ; et
(iii) parallèle à un axe longitudinal d'un trait de scie défini à l'intérieur de la pièce par la lame de scie circulaire ; et
(b) une composante de vitesse angulaire d'une vitesse angulaire de la scie circulaire, dans lequel la composante de vitesse angulaire est autour d'un axe de vitesse angulaire,
dans lequel la détermination inclut en particulier un parmi :
i) déterminer que l'état de recul existe lorsque la composante d'accélération linéaire est en dehors d'une plage de composantes d'accélération linéaire de seuil ;
(ii) déterminer que l'état de recul n'existe pas lorsque la composante d'accélération linéaire est dans les limites de la plage de composantes d'accélération linéaire de seuil,
(iii) déterminer que l'état de recul existe lorsque la composante de vitesse angulaire est en dehors d'une plage de composantes de vitesse angulaire de seuil ; et
(iv) déterminer que l'état de recul n'existe pas lorsque la composante de vitesse angulaire est dans les limites de la plage de composantes de vitesse angulaire de seuil,
dans lequel la direction d'accélération linéaire coïncide en particulier avec l'axe de vitesse angulaire, dans lequel la composante de vitesse angulaire est en particulier dans les limites de la plage de composantes de vitesse angulaire de seuil lorsque la rotation autour d'un axe d'accélération linéaire, qui s'étend dans la direction d'accélération linéaire, inclut la rotation d'un arbre de la scie circulaire vers le support de pièce de la scie circulaire.

12. Procédé selon la revendication 11, dans lequel le paramètre de falsification est déterminé dans les limites d'une fenêtre de temps de détection,
dans lequel la fenêtre de temps de détection prolonge en particulier un temps de détection de seuil avant un temps de recul auquel au moins un parmi :
(i) l'accélération de la scie circulaire est supérieure à la valeur d'accélération de seuil ;
(ii) la direction de l'accélération de la scie circulaire est dans les limites de la plage de directions donnée ; et
(iii) la vitesse angulaire de la scie circulaire est supérieure à la valeur de vitesse angulaire de seuil ;
dans lequel, en particulier, au moins un parmi :
(i) la composante d'accélération linéaire est dans les limites d'une plage de composantes d'accélération linéaire de seuil pendant au moins un sous-ensemble de la fenêtre de temps de détection ; et
(ii) la composante de vitesse angulaire est dans les limites d'une plage de composantes de vitesse angulaire de seuil pendant au moins un sous-ensemble de la fenêtre de temps de détection.

13. Scie circulaire, comprenant :
un ensemble actionné par l'utilisateur comportant :
(i) un capteur de mouvement configuré pour détecter un mouvement de l'ensemble actionné par l'utilisateur à l'intérieur d'un plan de détection d'accélération qui présente au moins un parmi être parallèle au plan de rotation de lame et s'étendre conjointement avec le plan de rotation de lame, et pour générer un signal de mouvement indicatif du mouvement de l'ensemble actionné par l'utilisateur ; et
(ii) une commande programmée pour commander un fonctionnement de la scie circulaire sur la base, au moins en partie, du signal de mouvement, dans lequel la commande est programmée pour mettre en œuvre le procédé selon l'une quelconque des revendications 1 à 12 ;
un support de pièce configuré pour positionner une pièce et la scie circulaire l'une par rapport à l'autre lorsque la pièce est coupée par la scie circulaire ; et
un pivot, dans lequel l'ensemble actionné par l'utilisateur est couplé à pivotement au support de pièce par l'intermédiaire du pivot, et dans lequel l'ensemble actionné par l'utilisateur et le support de pièce sont configurés pour tourner de manière opérationnelle, l'un par rapport à l'autre, autour d'un axe de pivot du pivot afin de couper la pièce.

14. Scie circulaire selon la revendication 13, dans laquelle le capteur de mouvement est positionné à distance de l'axe de pivotement, dans laquelle la distance est comprise entre 1 cm et 20 cm, en particulier entre 6 cm et 18 cm, en particulier entre 8 cm et 16 cm, dans laquelle le capteur de mouvement est en particulier orienté de telle sorte qu'un axe de détection d'accélération s'étend de manière sensiblement perpendiculaire à l'axe de pivotement.

15. Scie circulaire selon l'une quelconque des revendications 13 à 14, dans laquelle l'ensemble actionné par l'utilisateur comprend une carte à circuit, dans laquelle la carte à circuit comporte à la fois la commande et le capteur de mouvement.
